# EUROPÄISCHE PATENTANMELDUNG

(11) **EP 3 543 034 A1**
(43) Veröffentlichungstag der Anmeldung: **25.09.2019**
(21) Anmeldenummer: 18163694.5
(22) Anmeldetag: 23.03.2018
(51) Int. Cl.: B44C 5/04, B32B 5/02, B32B 5/16, B29C 43/22, B41M 5/00

(54) **TRÄGERPLATTE FÜR EIN DIREKT BEDRUCKTES WAND-, BODEN- ODER DECKENPANEEL**

(71) Anmelder: Akzenta Paneele + Profile GmbH, 56759 Kaisersesch (DE)
(72) Erfinder: Hannig, Hans-Jürgen, 51427 Bergisch Gladbach (DE)
(74) Vertreter: Michalski Hüttermann & Partner Patentanwälte mbB

(57) **Zusammenfassung**

Die vorliegende Erfindung schlägt eine Trägerplatte (100) für ein direkt bedrucktes Wand-, Boden- oder Deckenpaneel vor, aufweisend zumindest eine Kernlage (110) aus einem einen Kunststoff aufweisenden Matrixmaterial und einem Feststoffmaterial, und eine oberhalb der Kernlage angebrachte Lage eines ersten Kunststoffvlieses (27). Die Trägerplatte ist insbesondere dadurch gekennzeichnet, dass das Kunststoffvlies auf der der Kernlage gegenüberliegenden Seite eine polare Oberfläche aufweist. Darüber hinaus betrifft die Erfindung ein Verfahren zur Herstellung einer erfindungsgemäßen Trägerplatte sowie ein unter Verwendung einer erfindungsgemäßen Trägerplatte direkt bedrucktes Wand-, Boden- oder Deckenpaneel.

## Beschreibung

Die vorliegende Erfindung betrifft eine Trägerplatte für ein direkt bedrucktes Wand-, Boden-oder Deckenpaneel. Die vorliegende Erfindung betrifft ferner ein Wand-, Boden oder Deckenpaneel, das eine derartige Trägerplatte aufweist, sowie ein Verfahren zur Herstellung eines dekorierten Wand-, Boden oder Deckenpaneels unter Verwendung einer erfindungsgemäßen Trägerplatte.

Dekorierte Paneele sind an sich bekannt, wobei unter dem Begriff Wandpaneel auch Paneele zu verstehen sind, die zur Decken- oder Türbekleidung geeignet sind. Sie bestehen üblicherweise aus einem Träger beziehungsweise Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Harz imprägniert ist. Auch die Deckschicht und die übrigen Schichten werden meist aus Harz hergestellt.

Aus dem Dokument EP 2 829 415 A1 ist ferner ein Verfahren zur Herstellung eines dekorierten Wand- oder Bodenpaneels bekannt, bei dem ausgehend von einem granularen Trägermaterial ein Träger und anschließende ein Paneel geformt wird. Bei einem derartigen Verfahren kann beispielsweise ein WPC als Trägermaterial Verwendung finden.

Aus der EP 3 147 135 A1 ist ein Trägermaterial zur Herstellung eines Trägers für ein dekoriertes Wand- oder Bodenpaneel bekannt, wobei das Trägermaterial ein einen Kunststoff aufweisendes Matrixmaterial und ein Feststoffmaterial aufweist, wobei das Feststoffmaterial zumindest teilweise durch Talkum gebildet ist. Das offenbarte Trägermaterial zeigt den Vorteil einer guten Herstellbarkeit bei gleichzeitig hoher Dimensionsstabilität insbesondere bezüglich Feuchte- und Temperatureinfluss und guten mechanischen Eigenschaften.

Die Herstellung der Paneele kann dabei unter Umständen noch Verbesserungspotential bieten. Verbesserungspotential kann sich dabei insbesondere hinsichtlich einer weiter verbesserten Dimensionsstabilität auch bei großen Temperaturschwankungen sowie einer verbesserten Bedruckbarkeit mittels Direktdruckverfahren bieten.

Es ist daher die Aufgabe der vorliegenden Erfindung, eine verbesserte Trägerplatte für ein direkt bedrucktes Wand-, Boden- oder Deckenpaneel bereitzustellen.

Gelöst wird diese Aufgabe durch ein Trägerplatte gemäß Anspruch 1. Gelöst wird diese Aufgabe ferner durch ein Paneel gemäß Anspruch 12 sowie durch ein Verfahren gemäß Anspruch 14. Bevorzugte Ausgestaltungen der Erfindung sind in den Unteransprüchen, in der Beschreibung oder den Figuren angegeben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird ein Trägerplatte für ein direkt bedrucktes Wand-, Boden- oder Deckenpaneel vorgeschlagen, welche zumindest eine Kernlage aus einem einen Kunststoff aufweisenden Matrixmaterial und einem Feststoffmaterial, und eine oberhalb der Kernlage angebrachte Lage eines ersten Kunststoffvlieses aufweist und welche dadurch gekennzeichnet, dass das Kunststoffvlies auf der der Kernlage gegenüberliegenden Seite eine polare Oberfläche aufweist. Üblicher Weise wird bei direkt bedruckten Dekorpaneelen auf Basis eines Kunststoffträgers vor dem Aufdruck des Dekorbildes ein Druckuntergrund aufgetragen, welcher insbesondere eine verbesserte Anbindung der Druckfarbe an die Trägerplatte sowie ein gleichmäßigeres Druckbild sicherstellen soll. Überraschender Weise hat sich gezeigt, dass das erfindungsgemäße Vorsehen eines entsprechenden Kunststoffvlieses auf der zu bedruckenden Oberseite einer kunststoffbasierten Trägerplatte sowohl ein gleichmäßiges Druckbild bei einer anschließenden Direktbedruckung ermöglicht, als auch zu einer verbesserten Dimensionsstabilität über weite Temperaturbereiche führt. Dabei bleiben die anderen positiven Eigenschaften der vorbekannten Trägerplatten wie insbesondere die Feuchtigkeitsbeständigkeit unveränderte gut erhalten.

Unter dem Begriff "dekoriertes Wand- oder Bodenpaneel" beziehungsweise "Dekorpaneel" sind im Sinne der Erfindung insbesondere Wand-, Decken, Tür- oder Bodenpaneele zu verstehen, welche ein auf eine Trägerplatte aufgebrachtes eine Dekorvorlage nachbildendes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wir Steinoberflächen oder Keramikoberflächen nachempfunden.

Entsprechend kann unter einer "Dekorvorlage" im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Unter einem "schüttfähigen" Material kann insbesondere ein Material verstanden werden, welches durch einen Schüttvorgang beziehungsweise Streuvorgang auf eine Unterlage aufgebracht werden kann. Dabei kann das Material als Fluid vorliegen oder insbesondere als schüttfähiger Feststoff.

Ferner kann unter einem "Granulat" beziehungsweise einem "granularen Material" ein Feststoff beziehungsweise ein Haufwerk eines Feststoffs verstanden werden, welcher eine Vielzahl fester Partikel, wie etwa Körner oder Kugeln, umfasst beziehungsweise daraus besteht. Beispielhaft aber nicht abschließend seien hier körnige oder pulverförmige Materialien genannt.

Unter einem "Träger" kann insbesondere eine in einem fertig gestellten Paneel als Kern beziehungsweise als Basislage dienende Lage verstanden werden, die insbesondere einen Naturstoff, wie etwa einen Holzwerkstoff, einen Faserwerkstoff oder einen Werkstoff umfassend einen Kunststoff aufweisen kann. Beispielsweise kann der Träger dem Paneel bereits eine geeignete Stabilität verleihen oder zu dieser beitragen.

Entsprechend kann unter einem Trägermaterial ein derartiges Material verstanden werden, welches den Träger zumindest zu einem mehrwiegenden Teil bildet. Insbesondere kann eine Kernlage des Trägers aus dem Trägermaterial bestehen.

Unter einem "bahnartigen Träger" kann dabei ein Träger verstanden werden, der etwa in seinem Herstellungsprozess eine bahnartige und damit im Vergleich zu seiner Dicke beziehungsweise Breite deutlich größere Länge aufweist und deren Länge beispielsweise größer als 15 Meter betragen kann.

Unter einem "plattenförmigen Träger" kann dabei ferner im Sinne der vorliegenden Erfindung ein Träger verstanden werden, der durch Vereinzelung aus dem bahnartigen Träger geformt ist und in der Form einer Platte ausgebildet ist. Ferner kann der plattenförmige Träger bereits die Form und/oder Größe des herzustellenden Paneels vorgeben. Jedoch kann der plattenförmige Träger auch als Großplatte vorgesehen sein. Eine Großplatte im Sinne der Erfindung ist dabei insbesondere ein Träger, dessen Abmessungen die Abmessungen der letztendlichen Dekorpaneele um ein mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte dem bahnförmigen Träger entsprechen.

Gemäß einer Ausgestaltung der Erfindung ist es vorgesehen, dass das erste Kunststoffvlies einen Schmelzpunkt oberhalb des Schmelzpunktes des Matrixmaterials der Kernlage aufweist. Insbesondere kann es dabei vorgesehen sein, dass der Unterschied ΔT_{S} der Schmelzpunkte des Kunststoffvlieses und des Matrixmaterials in einem Bereich zwischen ≥ 1°C und ≤ 80°C, vorzugsweise zwischen ≥ 2°C und ≤ 50°C, insbesondere zwischen ≥ 3°C und ≤ 40°C liegt. In vorteilhafter Weise hat sich gezeigt, dass ein nicht oder nur sehr geringes Aufschmelzen des Kunststoffvlieses eine hervorragende Oberfläche für eine anschließende Direktbedruckung bereitstellt.

Gemäß einer weiteren Ausgestaltung der Erfindung kann es vorgesehen sein, dass das erste Kunststoffvlies ein Flächengewicht G in einem Bereich zwischen ≥ 15 g/m² und ≤ 150 g/m², vorzugsweise zwischen ≥ 30 g/m² und ≤ 100 g/m² aufweist. Hierbei hat sich gezeigt, dass das Vorsehen von Kunststoffvliesen mit einem höheren Flächengewicht zu einer Verschlechterung der mechanischen Belastbarkeit der Oberfläche führt, wohingegen das Vorsehen eines Kunststoffvlieses mit einem geringeren Flächengewicht zu einer Verschlechterung des Druckbildes eines im Zuge eines Direktdruckverfahrens aufgebrachten Dekors führt.

Gemäß einer weiteren Ausgestaltung der Erfindung kann es vorgesehen sein, dass die polare Oberfläche eine polare Oberflächenspannung γ in einem Bereich zwischen ≥ 30 mJ/m² und ≤ 60 mJ/m², vorzugsweise zwischen ≥ 35 mJ/m² und ≤ 58 mJ/m² aufweist. Dabei wird die polare Oberflächenspannung mittels Kontaktwinkelmessung in Übereinstimmung mit der DIN 55660-5 bestimmt. Es hat sich gezeigt, dass eine derart gewählte polare Oberflächenspannung geeignet ist, mit der in einem Direktdruckverfahren, wie insbesondere einem Tintenstrahlverfahren unter Verwendung strahlungshärtbarer Tinten, aufgetragenen Farben bzw. Farbstoffen derart zu wechselwirken, dass ein hervorragendes Druckbild erreicht werden kann. In einer besonders bevorzugten Ausgestaltung kann dabei auf das Vorsehen eines separat auf das Kunststoffvlies aufgebrachten Druckuntergrundes verzichtet werden.

Gemäß einer weiter bevorzugten Ausgestaltung der Erfindung ist das erste Kunststoffvlies unter Ausschluss einer Zwischenlage auf der Kernlage angeordnet ist. Der Verzicht auf eine entsprechende Zwischenlage ist aus ökonomischer Sicht vorteilhaft, da auf einen zusätzlichen Auftragungsschritt verzichtet werden kann.

In einer Ausgestaltung der Erfindung kann das Matrixmaterial Polypropylen umfassen, wobei das Polypropylen eine Mischung aus einem Homopolymer und einem Copolymer aufweist und wobei das Feststoffmaterial zumindest ein Material aus der Gruppe bestehend aus Talkum, Blähton, Holz, Vulkanasche, Bims, Porenbeton, anorganischen Schäumen und Cellulose ist. Es hat gezeigt, dass auf Basis eines solchen Matrixmaterials Trägerplatten mit hervorragenden mechanischen, akustischen und haptischen Eigenschaften erhalten werden können, die darüber hinaus im Vergleich zu anderen Kunststoffmatrices wie z.B. PVC aus ökologischer Sicht zu bevorzugen sind.

In einer weiteren Ausgestaltung der Erfindung weist diese auf der dem ersten Kunststoffvlies gegenüberliegenden Seite der Kernlage ein zweites Kunststoffvlies auf. Bevorzugt weist das zweite Polyestervlies einen Schmelzpunkt oberhalb des Schmelzpunktes des Matrixmaterials der Kernlage auf, wobei der Unterschied ΔT_{S} der Schmelzpunkte des Kunststoffvlieses und des Matrixmaterials vorzugsweise in einem Bereich zwischen ≥ 1°C und ≤ 50°C, vorzugsweise zwischen ≥ 2°C und ≤ 40°C liegt.

Weiter bevorzugt weist das zweite Kunststoffvlies ein Flächengewicht G in einem Bereich zwischen ≥ 100 g/m² und ≤ 250 g/m² aufweist. Insbesondere kann es dabei bevorzugt sein, dass das Flächengewicht des zweiten Kunststoffvlieses höher ist, als das Flächengewicht des ersten Kunststoffvlieses. Es hat sich gezeigt, dass das Vorsehen eines zweiten Kunststoffvlieses an der Unterseite der Kernlage zum einen die mechanische Stabilität weiter verbesserte, insbesondere die thermische Ausdehnung der Trägerplatte weiter verringert, zum anderen zu verbesserten akustischen Eigenschaft eines aus einer entsprechenden Trägerplatte gefertigten Dekorpaneels führt. Dies gilt insbesondere für die Trittschaldämmung.

Gemäß einer bevorzugten Ausgestaltung weist das erste Kunststoffvlies und/oder das zweite Kunststoffvlies ein Polyesterkunststoff, vorzugsweise Polyethylenterephthalat (PET), oder ein Polyamid (PA), auf. Insbesondere kann es vorgesehen sein, dass das erste und/oder das zweite Kunststoffvlies aus einem Polyesterkunststoff, insbesondere PET, oder einem Polyamid (PA) bestehen. Dabei ist es weiter bevorzugt, dass das erste und das zweite Kunststoffvlies im Wesentlichen aus identischen Polyesterkunststoffen bestehen.

Das Trägermaterial aus welchem die Kernlage der erfindungsgemäßen Trägerplatte gebildet ist weist im Wesentlichen zwei Materialen auf, wobei unter einem Material im Sinne der vorliegenden Erfindung sowohl ein homogenes Material, also ein aus nur einer Substanz ausgebildetes Material, wie auch ein heterogenes Material, also ein aus wenigstens zwei Substanzen bestehendes Material, verstanden werden kann, wobei letzteres Material somit auch als Substanzmischung verstanden werden kann.

Im Detail umfasst das Trägermaterial ein Feststoffmaterial und ein Matrixmaterial. Das Feststoffmaterial ist dabei zu wenigstens 50 Gew.-%, insbesondere zu wenigstens 80 Gew.-%, beispielsweise zu 100%, bezogen auf das Feststoffmaterial, durch Talkum gebildet. Unter Talkum wird dabei in an sich bekannter Weise ein Magnesiumsilikathydrat verstanden, welches beispielsweise die chemische Summenformel Mg₃[Si₄O₁₀(OH)₂] aufweisen kann. Somit ist der Feststoffanteil vorteilhafter Weise zumindest durch einen Großteil aus dem mineralischen Stoff Talkum gebildet, wobei dieser Stoff etwa als Pulverform eingesetzt werden kann beziehungsweise in dem Trägermaterial in Form von Partikeln vorliegen kann. Grundsätzlich kann das Feststoffmaterial aus einem pulverförmigen Feststoff bestehen.

Vorteilhaft kann es sein, wenn die spezifische Oberflächendichte nach ISO 4352 (BET)) der Talkum-Partikel in einem Bereich liegt von ≥ 4 m²/g bis ≤ 8 m²/g, etwa in einem Bereich von ≥ 5 m²/g bis ≤ 7 m²/g.

Weiterhin kann es vorteilhaft sein, wenn das Talkum bei einer Schüttdichte nach DIN 53468 vorliegt in einem Bereich von ≥ 0,15 g/cm³ bis ≤ 0,45 g/cm³, etwa in einem Bereich von ≥ 0,25 g/cm³ bis ≤ 0,35 g/cm³.

Das Matrixmaterial dient insbesondere dazu, bei dem fertig hergestellten Träger das Feststoffmaterial aufzunehmen beziehungsweise einzubetten. Das Matrixmaterial weist dabei einen Kunststoff oder eine Kunststoffmischung auf. Insbesondere mit Bezug auf das Herstellungsverfahren, wie dies nachfolgend im Detail beschrieben ist, kann es vorteilhaft sein, dass das Matrixmaterial einen thermoplastischen Kunststoff aufweist. Dadurch wird es ermöglicht, dass das Trägermaterial beziehungsweise ein Bestandteil des Trägermaterials einen Schmelzpunkt oder einen Erweichungspunkt aufweist, um das Trägermaterial in einem weiteren Verfahrensschritt durch Hitzeeinwirkung zu Formen, wie dies nachstehend mit Bezug auf das Verfahren im Detail beschrieben ist. Das Matrixmaterial kann insbesondere aus einem Kunststoff beziehungsweise einem Kunststoffgemisch und gegebenenfalls einem Haftvermittler bestehen. Bevorzugt können diese Komponenten zumindest 90Gew.-%, besonders bevorzugt zumindest 95 Gew.-%, insbesondere wenigstens 99 Gew.-% des Matrixmaterials ausmachen.

Im Detail ist es ferner vorgesehen, dass das Matrixmaterial in einer Menge, bezogen auf das Trägermaterial, von ≥ 30 Gew.-% bis ≤ 70 Gew.-%, insbesondere von ≥ 40 Gew.-% bis ≤ 60 Gew.-% vorliegt. Weiterhin ist es vorgesehen, dass das Feststoffmaterial, bezogen auf das Trägermaterial, in einer Menge, bezogen auf das Trägermaterial, von ≥ 30 Gew.-% bis ≤ 70 Gew.-%, insbesondere von ≥ 40 Gew.-% bis ≤ 60 Gew.-%, vorliegt.

In Abhängigkeit des gewünschten Anwendungsgebietes und der gewünschten Eigenschaften des Paneels können die Anteile an Matrixmaterial beziehungsweise Feststoffmaterial wählbar sein. Dadurch kann eine gute Adaptierbarkeit an das gewünschte Anwendungsgebiet möglich werden. Grundsätzlich kann es jedoch bevorzugt sein, dass der Anteil des Feststoffmaterials größer oder gleich dem Anteil des Matrixmaterials ist.

Mit Bezug auf das Trägermaterial ist es weiterhin vorgesehen, dass das Matrixmaterial und das Feststoffmaterial gemeinsam, bezogen auf das Trägermaterial, in einer Menge von ≥ 95 Gew.-%, insbesondere ≥ 99 Gew.-%, vorliegen. In anderen Worten kann es vorgesehen sein, dass neben dem Feststoffmaterial und dem Matrixmaterial in dem Trägermaterial weitere Substanzen lediglich in einem Anteil, bezogen auf das Trägermaterial, von < 5 Gew.-%, vorzugsweise von < 1 Gew.-% vorliegen. Somit kann es vorteilhaft sein, dass das Trägermaterial zu einem Großteil aus dem Feststoffmaterial und dem Matrixmaterial besteht. Besonders bevorzugt kann es vorgesehen sein, dass das Matrixmaterial und das Feststoffmaterial gemeinsam, bezogen auf das Trägermaterial, in einer Menge von 100 Gew.-%, vorliegen, das Trägermaterial somit aus dem Matrixmaterial und dem Feststoffmaterial besteht.

Durch eine Beschränkung der Materialien des Trägermaterials und damit durch eine geringe Anzahl an Materialien zum Herstellen des Trägers kann der Träger besonders kostengünstig erzeugbar sein. Darüber hinaus kann die Prozessführung der Herstellung eines Trägers beziehungsweise eines Paneels sehr einfach sein, so dass auch die Herstellung einfach und kostengünstig möglich ist.

Eine vorbeschriebene Trägerplatte bietet weiterhin insbesondere den Vorteil, ein Paneel mit einer verbesserten Dimensionsstabilität auch bei großen Temperaturschwankungen sowie einer verbesserten Bedruckbarkeit mittels Direktdruckverfahren bereitzustellen.

Gleichzeitig bietet die Trägerplatte den Vorteil, dass hiermit erzeugte Paneele eine sehr gute Stabilität aufweisen, so dass die Gefahr von Beschädigungen des Paneels während des Transports und während des Gebrauchs äußerst gering ist.

Dadurch, dass das Matrixmaterial insbesondere einen Kunststoff, wie etwa einen thermoplastischen Kunststoff, aufweist, kann es trotz der hohen Stabilität ermöglicht werden, dass aus der Trägerplatte erzeugte Paneele sehr elastisch beziehungsweise federnd sein können, was einen komfortablen Eindruck beim Begehen erlaubt und ferner die auftretenden Geräusche bei einem Begehen im Vergleich zu herkömmlichen Materialien reduzieren kann, somit ein verbesserter Trittschall realisierbar sein kann. Zu diesen Eigenschaften kann darüber hinaus in vorteilhafter Weise das in einer Ausgestaltung der Erfindung vorgesehene Kunststoffvlies an der Unterseite der Kernlage beitragen.

Insbesondere thermoplastische Kunststoffe bieten ferner den Vorteil, dass die aus ihnen hergestellten Produkte sehr leicht rezykliert werden können. Hierdurch ergibt sich eine weitere Möglichkeit zur Senkung der Herstellungskosten.

Ein aus dem Trägermaterial hergestellter Träger kann weiterhin problemlos mit einem Dekor versehen werden. Beispielsweise eignet sich ein derartiger Träger sehr gut für ein Bedrucken insbesondere mit einem Digitaldruckverfahren, beispielsweise einem Tintenstrahldruckverfahren. Dadurch lassen sich derartige Träger problemlos mit einem qualitativ hochwertigen Dekor versehen, was das Herstellen eines hochwertigen Paneels erlauben kann.

Bevorzugt kann es vorgesehen sein, dass Talkum in Form von Partikeln vorliegt, die eine Partikelgröße D₅₀ aufweisen in einem Bereich von ≥ 3µm bis ≤ 6µm, vorzugsweise in einem Bereich von ≥ 4µm bis ≤ 5µm, beispielsweise von 4,5 µm und/oder dass das Talkum in Form von Partikeln vorliegt, die eine Partikelgröße D₉₈ aufweisen in einem Bereich von ≥ 10µm bis ≤ 30µm, vorzugsweise in einem Bereich von ≥ 15µm bis ≤ 20µm, beispielsweise von 17 µm. Der Anteil an Partikeln, die eine Größe von weniger als 2µm aufweisen, kann bei 18% liegen. Insbesondere derartige Talkum-Partikel bieten den Vorteil, dass diese eine besonders schonende Herstellung des Trägers ermöglichen, da sie problemlos in dem Matrixmaterial eingebettet werden können und damit keinen abrasiven Effekt auf verwendete Presseinheiten ausüben. Darüber hinaus lassen sich insbesondere unter Verwendung von Talkum-Partikeln in den vorgegebenen Partikelgrößenverteilungen Träger beziehungsweise Paneele mit bevorzugten mechanischen Eigenschaften erzeugen.

Zur Bestimmung der Partikelgrößenverteilung kann auf die allgemein bekannten Verfahren, wie beispielsweise die Laserdiffraktometrie, zurückgegriffen werden, mit welcher Partikelgrößen im Bereich von einigen Nanometern bis hin zu mehreren Millimetern bestimmt werden können. Mittels dieser Methode lassen sich auch D₅₀ bzw. D₉₈ Werte ermitteln, welche jeweils aussagen, dass 50% (D₅₀) bzw. 98% (D₉₈) der gemessenen Partikel kleiner sind als der jeweils angegebene Wert.

Es kann weiterhin vorteilhaft sein, dass das Matrixmaterial Polypropylen umfasst, wobei das Polypropylen eine Mischung aus einem Homopolymer und einem Copolymer aufweist. Polypropylen ist als Matrixmaterial besonders geeignet, da es zum einen kostengünstig erhältlich ist und ferner als thermoplastischer Kunststoff gute Eigenschaften als Matrixmaterial zum Einbetten des Feststoffmaterials aufweist. Dabei kann insbesondere eine Mischung aus einem Homopolymer und einem Copolymer für das Matrixmaterial besonders vorteilhafte Eigenschaften ermöglichen. Derartige Materialien bieten ferner den Vorteil, dass diese bereits bei geringen Temperaturen, wie etwa in einem Bereich von ≥ 180°C bis ≤ 200°C in dem vorbeschriebenen Verfahren zu einem Träger geformt werden können, so dass eine besonders effektive Prozessführung, etwa mit beispielhaften Liniengeschwindigkeiten in einem Bereich von 6m/min, ermöglicht werden kann.

Als Copolymer kann beispielsweise ein solches Verwendung finden, das aus Propylen und Ethylen als Monomereinheiten aufgebaut ist, beispielsweise daraus besteht.

Durch das Verwenden eines Homopolymers kann insbesondere eine hohe Schmelzflussrate ermöglicht werden, wobei die Schmelzflussrate des Homopolymers insbesondere größer sein kann als die des Copolymers. Das kann eine besonders gute Formbarkeit des Trägers während des Herstellungsverfahrens ermöglichen. Ferner kann das Homopolymer dadurch ein besonders gutes Einbetten des Feststoffmaterials ermöglichen. Besonders vorteilhaft kann es deshalb sein, wenn das Homopolymer des Polypropylens ein solches ist, welches eine Schmelze-Massefließrate von ≥ 5g/10min, beispielsweise ≥ 20g/10min, besonders bevorzugt ≥ 50g/10min aufweist. Die Schmelze-Massefließrate kann dabei bestimmbar sein nach ISO 1183.

Weiterhin kann es vorteilhaft sein, wenn das Homopolymer eine Zugfestigkeit nach ISO 527-2 aufweist, die in einem Bereich liegt von ≥ 30 MPa bis ≤ 45 MPa, beispielsweise in einem Bereich von ≥ 35 MPa bis ≤ 40 MPa, um eine gute Stabilität zu erreichen.

Ferner kann insbesondere für eine gute Stabilität es von Vorteil sein, wenn das Homopolymer ein Biegemodul nach ISO 178 aufweist in einem Bereich von ≥ 1000 MPa bis ≤ 2200 MPa, beispielsweise in einem Bereich von ≥ 1300 MPa bis ≤ 1900 MPa, etwa in einem Bereich von ≥ 1500 MPa bis ≤ 1700 MPa.

Bezüglich der Zugverformung des Homopolymers nach ISO 527-2 kann es ferner von Vorteil sein, wenn diese in einem Bereich liegt von ≥ 5% bis ≤ 13%, beispielsweise in einem Bereich von ≥ 8% MPa bis ≤ 10%.

Für eine besonders vorteilhafte Herstellbarkeit kann es vorgesehen sein, dass die Vicat-Erweichungstemperatur nach ISO 306/A für ein spritzgegossenes Bauteil, in einem Bereich liegt von ≥ 130°C MPa bis ≤ 170°C, beispielsweise in einem Bereich von ≥ 145°C bis ≤ 158°C.

Das Copolymer dagegen kann insbesondere der mechanischen Festigkeit des Trägermaterials beziehungsweise des Trägers dienen, da ein Copolymer oftmals eine insbesondere mit Bezug auf das Homopolymer vergleichsweise große mechanische Festigkeit aufweist. Besonders vorteilhaft kann es dabei sein, dass das Copolymer eine Kugelhärte (ball indentation hardness) nach ISO 2039-1 von ≥ 15 MPa, beispielsweise ≥ 30MPa, besonders bevorzugt ≥ 40MPa aufweist. Insbesondere kann die Kugelhärte des Copolymers größer sein als die des Homopolymers.

Besonders vorteilhaft kann es ferner sein, wenn das Copolymer des Polypropylens ein solches ist, welches eine Schmelze-Massefließrate von ≥ 4g/10min bis ≤ 20g/10min, beispielsweise von ≥ 6g/10min bis ≤ 12g/10min. Die Schmelze-Massefließrate kann dabei bestimmbar sein nach ISO 1183.

Ferner kann insbesondere für eine gute Stabilität es von Vorteil sein, wenn das Copolymer ein Zugmodul nach ISO 527-1, -2 aufweist in einem Bereich von ≥ 900 MPa bis ≤ 1400 MPa, beispielsweise in einem Bereich von ≥ 1100 MPa bis ≤ 1250 MPa.

Bezüglich der Zugfestigkeit nach ISO 527-2 des Copolymers kann es ferner von Vorteil sein, wenn diese in einem Bereich liegt von ≥ 15 MPa bis ≤ 27 MPa, beispielsweise in einem Bereich von ≥ 18 MPa bis ≤ 24 MPa. Insbesondere kann die Zugfestigkeit des Copolymers kleiner sein als die des Homopolymers.

Für eine vorteilhafte Herstellbarkeit kann es ferner vorteilhaft sein, dass die Wärmeformbeständigkeit, insbesondere eine Wärmeformbeständigkeit B (0,45MPa), nicht getempert, nach ISO 75B-1, -2, in einem Bereich liegt von ≥ 50°C MPa bis ≤ 110°C, beispielsweise in einem Bereich von ≥ 70°C bis ≤ 90°C.

Somit kann bereits innerhalb des Matrixmaterials eine besonders einfache und gute Steuerung der Eigenschaften des Matrixmaterials und damit des Trägermaterials möglich sein. Eine derartige Steuerung kann somit erfolgen durch ein einfaches Auswählen des entsprechenden Homopolymere beziehungsweise Copolymere und durch die Auswahl der entsprechenden Gewichtsanteile.

Mit Bezug auf die Verteilung von Homopolymer und Copolymer kann es bevorzugt sein, dass das Homopolymer bezogen auf das Polypropylen in einem Anteil von ≥ 10 Gew.-% bis ≤ 40 Gew.-%, beispielsweise in einem Anteil von ≥ 20 Gew.-% bis ≤ 30 Gew.-%, vorliegt, etwa in einem Anteil von ≥ 23 Gew.-% bis ≤ 28 Gew.-%, und/oder dass das Copolymer bezogen auf das Polypropylen in einem Anteil von ≥ 60 Gew.-% bis ≤ 90 Gew.-%, beispielsweise in einem Anteil von ≥ 70 Gew.-% bis ≤ 80 Gew.-%, etwa in einem Anteil von ≥ 72 Gew.-% bis ≤ 76 Gew.-%, vorliegt, insbesondere wobei das Polypropylen aus dem Homopolymer und dem Copolymer besteht. Beispielsweise kann der Anteil des Homopolymers bei 26 Gew.-% liegen und kann der Anteil des Copolymers bei 74 Gew.-% liegen. Insbesondere mit einer derartigen Ausgestaltung des Polypropylens können besonders vorteilhafte Eigenschaften des Polypropylens als Matrixmaterials erreicht werden. Im Detail konnte in überraschender Weise gefunden werden, dass insbesondere die vorbeschriebenen Anteile des Homopolymers beziehungsweise des Copolymers eine gute Verarbeitbarkeit mit einer guten Stabilität verbinden.

Weiterhin kann es bevorzugt sein, dass die Dichte des Copolymers größer oder gleich der Dichte des Homopolymers ist. Auch dieses Merkmal kann zu einer besonders bevorzugten Herstellbarkeit in Kombination mit besonders vorteilhaften mechanischen Eigenschaften, insbesondere einer besonders guten Stabilität eines mit dem vorbeschriebenen Trägermaterial hergestellten Paneels führen. Beispielsweise kann die Dichte des Homopolymers nach ISO 1183 in einem Bereich von ≥ 0,85 g/cm³ bis ≤ 0,95 g/cm³, etwa von ≥ 0,89 g/cm³ bis ≤ 0,91 g/cm³, beispielsweise bei 0,900 g/cm³, liegen. Weiter beispielsweise kann die Dichte des Homopolymers nach ISO 1183 in einem Bereich von ≥ 0,86 g/cm³ bis ≤ 0,96 g/cm³, etwa von ≥ 0,895 g/cm³ bis ≤ 0,915 g/cm³, beispielsweise bei 0,905 g/cm³, liegen.

Weiterhin kann es bevorzugt sein, dass das Matrixmaterial Polyethylen in Form von LDPE umfasst. Beispielsweise kann das Matrixmaterial aus LDPE bestehen. Derartige Materialien bieten den Vorteil, dass diese bereits bei geringen Temperaturen, wie etwa in einem Bereich von ≥ 180°C bis ≤ 200°C in dem vorbeschriebenen Verfahren zu einem Träger geformt werden können, so dass eine besonders effektive Prozessführung, etwa mit beispielhaften Liniengeschwindigkeiten in einem Bereich von 6m/min, ermöglicht werden kann. Darüber hinaus ist LDPE kostengünstig erhältlich und kann ferner dadurch, dass nur ein einziges homogenes Material, also nur eine Substanz, verwendet werden braucht, das Bereitstellen des Matrixmaterials vereinfacht werden.

Insbesondere, wenn das Matrixmaterial PE umfasst, kann es vorgesehen sein, dass das Matrixmaterial frei von einem Haftvermittler ist. Diese Ausgestaltung kann es ermöglichen, dass das Trägermaterial besonders kostengünstig ist, da auf eine Komponente, welche dem Matrixmaterial in Abhängigkeit des verwendeten Polymers des Matrixmaterials zugegeben werden sollte verzichtet werden kann. Darüber hinaus kann das Bereitstellen des Trägermaterials weiter vereinfacht werden.

Es kann weiterhin vorgesehen sein, dass das Trägermaterial aus wenigstens einem polymeren Kunststoff als Matrixmaterial, Talkum und gegebenenfalls einem Haftvermittler, besteht. Insbesondere in dieser Ausgestaltung kann eine Herstellung besonders kostengünstig möglich sein und kann die Prozessführung besonders einfach sein. Denn das Trägermaterial besteht lediglich aus Talkum, einer polymeren Matrix, die beispielsweise aus einem homogenen Kunststoffmaterial bestehen kann, und insbesondere in Abhängigkeit des verwendeten Kunststoffs einem Haftvermittler, welcher in an sich bekannter Weise mit Bezug auf den Kunststoff ausgewählt werden kann.

Es kann weiterhin vorteilhaft sein, dass das Feststoffmaterial neben Talkum wenigstens einen weiteren Feststoff aufweist. Diese Ausgestaltung kann es insbesondere ermöglichen, dass das Gewicht des Trägermaterials beziehungsweise eines mit dem Trägermaterial ausgebildeten Paneels verglichen mit einem Trägermaterial beziehungsweise Paneel, bei dem das Feststoffmaterial aus Talkum besteht, deutlich reduziert sein. Somit kann der dem Feststoffmaterial zugesetzte Feststoff insbesondere eine verglichen mit Talkum reduzierte Dichte aufweisen. Beispielsweise kann der zugesetzte Stoff eine Rohdichte aufweisen, die in einem Bereich liegt von ≤ 2000 kg/m³, insbesondere von ≤ 1500 kg/m³, beispielsweise von ≤ 1000 kg/m³, besondere bevorzugt von ≤ 500 kg/m³. In Abhängigkeit des zugesetzten Feststoffs kann dabei ferner eine weitere Adaptierbarkeit an die gewünschten insbesondere mechanischen Eigenschaften ermöglicht werden.

Beispielhaft kann der weitere Feststoff ausgewählt sein aus der Gruppe bestehend aus Holz, etwa in Form von Holzmehl, Blähton, Vulkanasche, Bims, Porenbeton, insbesondere anorganischen Schäumen, Cellulose. Mit Bezug auf Porenbeton kann dies beispielsweise der von der Firma Xella unter dem Markennamen YTONG verwendete Feststoff sein, der im Wesentlichen aus Quarzsand, Kalk und Zement besteht. Mit Bezug auf den zugesetzten Feststoff kann dieser Beispielsweise aus Partikeln aufgebaut sein, die die gleiche Partikelgröße beziehungsweise Partikelgrößenverteilung aufweisen, wie die vorstehend für Talkum vorbeschriebenen Partikelgrößen beziehungsweise Partikelgrößenverteilungen. Die weiteren Feststoffe können insbesondere in einem Anteil in dem Feststoffmaterial vorliegen, der in einem Bereich von < 50 Gew.-%, insbesondere < 20 Gew.-%, beispielsweise < 10 Gew.-%, weiter beispielsweise < 5 Gew.-%, liegt.

Alternativ kann es beispielsweise für Holz, insbesondere für Holzmehl vorgesehen sein, dass dessen Partikelgröße zwischen >0µm und <600µm mit einer bevorzugten Partikelgrößenverteilung D₅₀ von ≥400µm liegt.

Des Weiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen.

Beispielsweise kann das Trägermaterial als Granulat vorliegen und dabei etwa eine zylindrische Form aufweisen. Ferner können unabhängig von der Form aber beispielhaft bei der zylindrischen Form die Granulatpartikel einen Durchmesser in einem Bereich von ≥ 2mm bis ≤ 3mm, beispielsweise 2mm oder 3mm, und eine Länge von ≥ 2mm bis ≤ 9mm, beispielsweise von ≥ 2mm bis ≤ 7mm oder von ≥ 5mm bis ≤ 9mm, aufweisen.

Zusammenfassend bietet das vorbeschriebene Trägermaterial somit den Vorteil einer guten Herstellbarkeit bei gleichzeitig hoher Dimensionsstabilität insbesondere bezüglich Feuchte-und Temperatureinfluss und guten mechanischen Eigenschaften.

Mit Bezug auf weitere technische Merkmale und Vorteile des vorbeschriebenen Trägermaterials wird hiermit explizit auf die Beschreibung des Paneels, des Verfahrens und auf die Figuren verwiesen.

Die vorliegende Erfindung betrifft ferner ein direkt bedrucktes Wand-, Decken- oder Fußbodenpaneel, aufweisend eine wie hier zuvor beschriebene Trägerplatte sowie eine unter Ausschluss einer Druckunterlageschicht auf dem ersten Kunststoffvlies mittels eines Direktdruckverfahrens aufgebrachte Dekorschicht. Ein derartiges Paneel ist insbesondere dadurch gekennzeichnet, dass eine Trägerplatte aufweist, wie diese vorstehend im Detail beschrieben ist. Mit Bezug auf die spezifischen Merkmale wird somit auf die vorstehende Beschreibung verwiesen.

Ferner können die Randbereiche des Paneels strukturiert beziehungsweise profiliert sein, um insbesondere lösbare Verbindungselemente vorzusehen. Diesbezüglich kann bei einer Profilierung im Sinne der Erfindung vorgesehen sein, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Insbesondere bei Nut- und/oder Federprofilen sind dabei elastische Werkstoffe von Vorteil, da durch diese allein derartige Profile erzeugbar sind, welche besonders einfach handhabbar und stabil sind. So sind insbesondere keine weiteren Materialien notwendig, um die Verbindungselemente zu erzeugen.

Zusammenfassend kann das vorbeschriebene Paneel den Vorteil einer hohen Dimensionsstabilität mit Bezug auf Hitze- und Feuchtigkeitseinfluss bei gleichzeitig guten mechanischen Eigenschaften bieten. Ferner kann ein derartiges Paneel sehr stabil sein und gleichzeitig eine hohe Elastizität aufweisen, was insbesondere für eine effektive und kostengünstige Ausgestaltung von Verbindungselementen an dem Randbereich des Trägers und ferner bezüglich einer Trittschalldämmung von Vorteil sein kann.

Mit Bezug auf weitere technische Merkmale und Vorteile des Paneels wird hiermit explizit auf die Beschreibung des Trägermaterials, des Verfahrens und auf die Figuren verwiesen.
1. Mit der Erfindung wird ferner ein Verfahren zur Herstellung eines dekorierten Wand-oder Bodenpaneels vorgeschlagen, aufweisend die aufeinanderfolgenden Schritte:
   a) Bereitstellen eines schüttfähigen Trägermaterials, insbesondere eines Granulats, wobei das Trägermaterial ein einen Kunststoff aufweisendes Matrixmaterial und ein Feststoffmaterial aufweist, wobei das Matrixmaterial in einer Menge, bezogen auf das Trägermaterial, von ≥ 30 Gew.-% bis ≤ 70 Gew.-% vorliegt und wobei das Feststoffmaterial, bezogen auf das Trägermaterial, in einer Menge von ≥ 30 Gew.-% bis ≤ 70 Gew.-% vorliegt, und wobei das Trägermaterial und das Feststoffmaterial gemeinsam, bezogen auf das Trägermaterial, in einer Menge von ≥ 95 Gew.-%, insbesondere ≥ 99 Gew.-%, vorliegen,
   b) Anordnen des Trägermaterials zwischen zwei bandartigen Fördermitteln, wobei oberhalb und/oder unterhalb des Trägermaterials ein Kunststoffvlies aufweisend einen Kunststoff mit einem Schmelzpunkt oberhalb des Schmelzpunktes des Matrixmaterials angeordnet wird, wobei der Unterschied ΔT_{S} der Schmelzpunkte des Kunststoffvlieses und des Matrixmaterials in einem Bereich zwischen ≥ 1°C und ≤ 50°C, vorzugsweise zwischen ≥ 2°C und ≤ 40°C liegt,
   c) Formen des Trägermaterials unter Einwirkung von Temperatur unter Ausbildung eines bahnförmigen Trägers,
   d) Komprimieren des Trägers,
   e) Behandeln des Trägers unter Einwirkung von Druck unter Verwendung einer Zweibandpresse,
   f) Abkühlen des Trägers,
   h) Aufbringen eines eine Dekorvorlage nachbildenden Dekors auf zumindest einen Teilbereich der Kunststoffvliese mittels eines Direktdruckverfahrens, und
   i) Aufbringen einer Schutzschicht auf zumindest einen Teilbereich des Dekors.

Ferner können sich die folgenden Schritte anschließen:
j) Strukturieren der Schutzschicht, und
k) Behandeln des Trägers zur elektrostatischen Entladung und gegebenenfalls zur elektrostatischen Beladung vor wenigstens einem der vorgenannten Verfahrensschritte.

Es konnte überraschender Weise gezeigt werden, dass es durch das vorbeschriebene Verfahren es ermöglicht werden kann, eine besonders vorteilhafte Herstellung insbesondere eines Trägers eines Wand- oder Bodenpaneels zu ermöglichen. Dabei kann das Verfahren besonders vorteilhaft sein durch eine Verwendung bzw. Herstellung der Trägerplatte, wie diese vorstehend im Detail beschrieben ist.

Gemäß einer bevorzugten Ausgestaltung des Verfahrens erfolgt die Aufbringung des Dekors in Schritt h) unter Ausschluss eines vor dem Aufbringen des Dekors auf das Kunststoffvlies aufgebrachten Druckuntergrundes. Hierdurch können ökonomische Vorteile durch die Einsparung des separaten Druckuntergrundes sowie produktionstechnische Vorteile durch das Wegfallen mit dem Auftragen eines Druckuntergrundes verbundenen Arbeitsschrittes erreicht werden.

Zunächst wird gemäß dem vorliegenden Verfahren eine erfindungsgemäße Trägerplatte beziehungsweise ein Kern erzeugt. Das vorbeschriebene Verfahren umfasst hierfür gemäß Verfahrensschritt a) zunächst das Bereitstellen eines schüttfähigen Trägermaterials, insbesondere eines Granulats, wobei das Trägermaterial ein einen Kunststoff aufweisendes Matrixmaterial und ein Feststoffmaterial aufweist, wobei das Matrixmaterial in einer Menge, bezogen auf das Trägermaterial, von ≥ 30 Gew.-% bis ≤ 70 Gew.-% vorliegt und wobei das Feststoffmaterial, bezogen auf das Trägermaterial, in einer Menge von ≥ 30 Gew.-% bis ≤ 70 Gew.-% vorliegt, und wobei das Trägermaterial und das Feststoffmaterial gemeinsam, bezogen auf das Trägermaterial, in einer Menge von ≥ 95 Gew.-%, insbesondere ≥ 99 Gew.-%, vorliegen.

Gemäß Verfahrensschritt b) wird das schüttfähige, insbesondere granulare, Trägermaterial zwischen zwei bandartigen Fördermitteln, wobei oberhalb und/oder unterhalb des Trägermaterials ein Kunststoffvlies aufweisend einen Kunststoff mit einem Schmelzpunkt oberhalb des Schmelzpunktes des Matrixmaterials angeordnet wird, wobei der Unterschied ΔT_{S} der Schmelzpunkte des Kunststoffvlieses und des Matrixmaterials in einem Bereich zwischen ≥ 1°C und ≤ 50°C, vorzugsweise zwischen ≥ 2°C und ≤ 40°C liegt. Das Trägermaterial kann so auf das untere Fördermittel bzw. sofern vorgesehen auf das auf dem unteren Fördermittel angeordnete Kunststoffvlies aufgebracht werden und anschließend durch das untere und das obere Fördermittel bzw. das oberhalb des Trägermaterials aufgebrachten oberen Kunststoffvlies begrenzt werden. Durch eine exakte Streuung kann dabei auf eine seitliche Begrenzung verzichtet werden. Durch die beiden Fördermittel kann das Trägermaterial zusammen mit dem vorgesehenen Kunststoffvlies oder den Kunststoffvliesen somit zu beziehungsweise durch einzelne Bearbeitungsstationen gefördert und zu einer Trägerplatte verarbeitet werden. Weiterhin kann das Trägermaterial bereits in diesem Verfahrensschritt vorgeformt werden. Somit können die bandartigen Fördermittel zwei Funktionen übernehmen, nämlich die eines Transportmittels und die einer Form.

Dabei können die bandartigen Fördermittel zumindest im Bereich der Zweibandpresse, wie dies nachfolgend beschrieben ist, zumindest teilweise aus Teflon beziehungsweise aus Polytetrafluorethylen (PTFE) ausgestaltet sein. Beispielsweise können die Bänder vollständig aus Polytetrafluorethylen geformt sein, oder es können Bänder verwendet werden, welche mit einer Außenbeschichtung aus Polytetrafluorethylen versehen sind. In letzterem Fall können etwa glasfaserverstärkte Kunststoffbänder oder Stahlbänder mit einer Beschichtung aus Polytetrafluorethylen Verwendung finden. Durch derartige Fördermittel kann aufgrund der Antihafteigenschaften dieses Werkstoffs eine besonders definierte beispielsweise glatte Oberfläche des erzeugten Trägers erzeugbar sein. So kann verhindert werden, dass das geförderte Trägermaterial an den Fördermitteln anhaftet und so die Oberflächenstruktur unmittelbar oder durch anhaftendes Material in einem nächsten Zyklus negativ beeinflusst. Darüber hinaus ist Polyterafluorethylen auch bei hohen Temperaturen beständig gegen Chemikalien wie auch gegen eine Zersetzung, so dass zum einen eine problemlose Temperaturbehandlung des Trägermaterials möglich ist und die Fördermittel ferner auch für einen langen Zeitraum stabil sind. Darüber hinaus kann das Trägermaterial frei wählbar sein.

Die Fördermittel können dabei die gesamte Vorrichtung durchlaufen, oder können unterbrochen sein und als mehrere Fördermittel ausgestaltet sein.

Das Anordnen des Trägermaterials gemäß Verfahrensschritt b) kann dabei insbesondere mittels eines oder einer Mehrzahl an Streuköpfen realisierbar sein, welche das Trägermaterial definiert etwa aus Lagerbehältern austragen können. Dabei kann ferner ein Rakel vorgesehen sein, welches das Material in Vertiefungen der Walze streicht. Anschließend kann das Material mit Hilfe einer rotierenden Bürstwalze aus der Streuwalze ausgetragen werden, wobei es gegen eine Prallfläche trifft und von dort auf das Fördermittel gleitet. Um die Streubreite zu regulieren kann ferner eine Streubreiteneinstellung vorgesehen sein. In dieser Ausgestaltung kann ein besonders homogenes Austragen des Trägermaterials erfolgen, was gleichermaßen zu einem homogenen Träger mit definierter Qualität führen kann.

Beispielsweise kann ein Streukopf oder können zwei, drei oder mehr Streuköpfe vorgesehen sein. Dadurch kann die Trägerplatte auf besonders einfache Weise besonders maßschneiderbar sein, indem beispielsweise eine gewünschte Materialmischung bereitgestellt werden kann. In dieser Ausgestaltung kann die Mischung problemlos während des Herstellungsprozesses oder zwischen zwei Chargen angepasst werden, so dass eine besonders große Variabilität sichergestellt werden kann. Darüber hinaus kann durch eine unterschiedliche Bestückung der einzelnen Streuköpfe eine Mischung für das Trägermaterial erst unmittelbar vor der Verarbeitung erzeugt werden, so dass eine negative Beeinflussung der verschiedenen Komponenten untereinander und eine dadurch bedingte Verringerung der Qualität der hergestellten Trägerplatte verhindert werden kann.

Beispielsweise kann ein Sensor zum Überprüfen des Anordnens des Trägermaterials zwischen den zwei bandartigen Fördermitteln vorgesehen sein, etwa mit Bezug auf das Flächengewicht des aufgetragenen Materials beziehungsweise die Homogenität.

In einem weiteren Schritt erfolgt gemäß Verfahrensschritt c) ein Formen des zwischen den bandartigen Fördermitteln angeordneten Trägermaterials unter Einwirkung von Temperatur beziehungsweise Wärme. In diesem Verfahrensschritt erfolgt durch die einwirkende Wärme beziehungsweise Hitze somit ein Aufschmelzen beziehungsweise Erweichen des Trägermaterials oder zumindest eines Teils desselben, wodurch beispielsweise das Granulat formbar werden kann. In diesem Zustand kann es den zwischen den Fördermitteln sich ausbildenden Aufnahmeraum homogen ausfüllen und so einen bahnförmigen Träger ausbilden, der weiter behandelt werden kann. Das bzw. die eingesetzten Kunststoffvliese schmelzen dabei bevorzugt lediglich soweit an, dass eine stoffschlüssige Verbindung zum Trägermaterial erreicht wird, ohne dass die Vliese vollständig durchschmelzen und dabei ggf. ihre Material und/oder Oberflächeneigenschaften signifikant verändern.

Die so ausgebildete bahnförmige Trägerplatte kann gleichzeitig zu oder nach Verfahrensschritt c) folgend gemäß Verfahrensschritt d) komprimiert werden. Dieser Verfahrensschritt kann insbesondere in einer geeigneten Presse beziehungsweise Walze erfolgen. Es erfolgt hier somit ein erstes Verdichten des bahnförmigen Trägers. Bei diesem Schritt kann der Träger bereits im Wesentlichen seine gewünschte Dicke erhalten, so dass bei folgenden Bearbeitungsschritten lediglich ein geringfügiges Verdichten erfolgen braucht und die weiteren Schritte somit besonders schonend verlaufen können, wie dies nachstehend im Detail erläutert wird. Dabei kann insbesondere sichergestellt werden, dass die Temperatur der Trägerplatte soweit abgekühlt ist, dass eine geeignete Komprimierbarkeit unter Erhalt des gewünschten Ergebnisses ermöglicht werden kann.

In einem weiteren Verfahrensschritt e) erfolgt nun ein weiteres Behandeln der Trägerplatte unter Einwirkung von Druck unter Verwendung einer Zweibandpresse. In diesem Verfahrensschritt können insbesondere die Oberflächeneigenschaften des Trägers eingestellt werden beziehungsweise kann die Dicke der Trägerplatte zumindest im Wesentlichen voreingestellt werden. Hierzu kann die zuvor verdichtete Trägerplatte unter Einwirkung von Druck behandelt werden, wobei insbesondere der Druck gering gewählt werden kann derart, dass diese Komprimierung lediglich in einem sehr geringen Bereich stattfindet. Somit kann die Ausgestaltung der Bearbeitungsvorrichtung in diesem Verfahrensschritt insbesondere gewählt werden in Abhängigkeit einer gewünschten Einstellung der Komprimierung, was besonders schonend und effektiv sein kann.

Dabei kann insbesondere das Verwenden einer Zweibandpresse von Vorteil sein, da mit einer derartigen Presse besonders schonende Komprimierungsschritte möglich sind und ferner die Oberflächengüte beziehungsweise Dicke der Trägerplatte besonders effektiv und definiert eingestellt werden kann. Weiterhin kann insbesondere das Verwenden einer Bandpresse hohe Liniengeschwindigkeiten ermöglichen, so dass der gesamte Prozess einen besonders hohen Durchlauf ermöglichen kann. Darüber hinaus kann etwa durch das Vorsehen von Pneumatikzylindern eine besonders gleichmäßige und definiert einstellbare Bandspannung der Zweibandpresse ermöglicht werden.

Insbesondere bei einer Erhitzung der Trägerplatte beziehungsweise des Trägermaterials in vorangegangenen Verfahrensschritten kann es bevorzugt vorgesehen sein, dass die Trägerplatte während oder vor Verfahrensschritt e) gekühlt wird, insbesondere unter den Schmelzpunkt oder den Erweichungspunkt eines Kunststoffbestandteils des Trägermaterials. In anderen Worten kann die Trägerplatte vor oder in der Zweibandpresse gekühlt werden. Dabei kann ein Kühlen nur in einem begrenzten Bereich erfolgen, so dass die Trägerplatte zwar noch eine verglichen zu der Raumtemperatur (22°C) erhöhte Temperatur aufweist, jedoch unterhalb der zuvor eingestellten erhöhten Temperatur liegt und dabei bevorzugt und in Abhängigkeit des verwendeten Kunststoffs, unterhalb den Schmelzpunkt oder den Erweichungspunkt des in dem Trägermaterial enthaltenen Kunststoffs. Geeignete Temperaturen liegen beispielsweise und nicht beschränkend in einem Bereich von unterhalb von 130°C, insbesondere unterhalb von 120°C, etwa in einem Bereich von ≥ 80°C bis ≤ 115°C für Polyethylen.

Mit Bezug auf die Komprimierung de Trägerplatte in der Zweibandpresse kann es vorgesehen sein, dass Verfahrensschritt e) realisiert unter Ausbildung eines Komprimierungsfaktors K1 des Trägers. Unter einem Komprimierungsfaktor K kann insbesondere verstanden werden, ein Faktor, um welchen sich die Dicke der Trägerplatte durch den Behandlungsschritt reduziert. So liegt bei einer ursprünglichen Dicke des Trägers vor der Behandlung von 5mm und einer Dicke der Trägerplatte nach der Behandlung von 4mm nach der Behandlung eine Dicke von 80% bezogen auf die Dicke vor der Behandlung vor beziehungsweise wurde die Dicke um 20% reduziert. Entsprechend liegt ein Komprimierungsfaktor K1 von 0,2 vor.

Beispielhafte Komprimierungsfaktoren für den Verfahrensschritt e) liegen etwa in einem Bereich von >0, etwa ≥ 0,1 bis ≤ 0,3, beispielsweise ≥ 0,15 bis ≤ 0,25.

Das vorbeschriebene Behandeln der Trägerplatte in Verfahrensschritt e) erfolgt bei einer Temperatur Tl. Diese Temperatur kann beispielsweise in einem Bereich von ≥ 150°C bis ≤ 190°C, beispielsweise von ≥ 160°C bis ≤ 180°C, etwa bei 170°C ablaufen. Dadurch, dass die Trägerplatte einen Kunststoffbestandteil aufweist, ist die Trägerplatte in diesem Temperaturbereich vergleichsweise weich und daher insbesondere entlang seiner gesamten Dicke formbar, so dass eine Komprimierung auch unter Anwendung geringer Anpressdrücke der Zweibandpresse besonders effektiv ablaufen kann. Dieser Verfahrensschritt kann somit insbesondere einem Einstellen beziehungsweise Kalibrieren der Dicke der Trägerplatte dienen.

Optional kann nach dem vorbeschriebenen Verfahrensschritt e) ein weiteres Behandeln der Trägerplatte unter Einwirkung von Druck bei einer Temperatur T2 unter Ausbildung eines Komprimierungsfaktors K2 des Trägers erfolgen, wobei T2 < T1 und wobei K2 < K1. Dabei beziehen sich insbesondere die Temperaturen T1 und T2 insbesondere auf die auf die Trägerplatte einwirkende Temperatur, so dass es möglich ist, dass die Trägerplatte nicht oder nicht in seiner gesamten Dicke zwingend die gleiche Temperatur aufweist. Dieser Verfahrensschritt umfasst somit einen weiteren Behandlungsvorgang der Trägerplatte unter Anwendung von Druck, der sich beispielsweise aber nicht beschränkend unmittelbar an den Verfahrensschritt e) anschließen kann. Insbesondere wird die Temperatur T2 vorzugsweise nicht durch ein bloßes Abkühlen während des Behandelns der Trägerplatte durch fehlendes Erhitzen eingestellt, sondern vielmehr durch die definierte Einwirkung eines jeweiligen Temperiermittels, wie etwa durch aktives Kühlen durch ein jeweiliges Temperiermittel.

Die Temperatur T2 während des Verfahrensschritts f) kann, beispielsweise unter Verwendung eines Trägers es ermöglichen, dass die Viskosität der Trägerplatte geringer ist beziehungsweise dass die Trägerplatte härter ist, als bei der in Verfahrensschritt e) verwendeten Temperatur T1.

Beispielsweise und in keiner Weise beschränkend kann bei diesem Verfahrensschritt eine Komprimierung erfolgen, die in einem Bereich von insbesondere >0% liegen kann, die jedoch begrenzt sein kann auf Werte in einem Bereich von ≤ 20%, wobei die Trägerplatte somit im Anschluss eine Dicke von 80% mit Bezug auf seine Dicke vor dem Verfahrensschritt f) aufweist. Mit Bezug auf den Komprimierungsfaktor K2 ist dieser somit geringer als der Komprimierungsfaktor K1. Beispielhafte Komprimierungsfaktoren liegen etwa in einem Bereich von > 0 bis ≤ 0.2, etwa in einem Bereich von > 0,03 bis ≤ 0,15, etwa ≥ 0,05 bis ≤ 0,12<, beispielhaft bei 0,1.

In dem Nachglätten kann etwa eine Temperatur eingestellt werden, die oberhalb der Kristallisierungstemperatur des Kunststoffs liegt. Für den Fall von linearem Polyethylen (LLDPE) als Bestandteil des Trägers, beispielsweise, kann etwa ein Erhitzen auf eine Temperatur in einem Bereich von ≥ 100°C bis ≤ 150°C, beispielsweise von 120°C, ausreichend und angemessen sein. Grundsätzlich kann daher die Temperatur T2 derart eingestellt werden, dass diese in einem Bereich von ≥ 100°C bis ≤ 150°C, beispielsweise von 120°C, liegt.

Durch den vorbeschriebenen mehrstufigen Komprimierungsvorgang kann eine sehr genaue und homogene Dicke insbesondere für Paneel-Trägerplatten erzielbar sein.

In einer weiteren bevorzugten Ausgestaltung kann es vorgesehen sein, dass die Trägerplatte zwischen den Verfahrensschritten e) und f) auf eine Temperatur T3 abgekühlt wird, wobei T3 < T1 und wobei T3 < T2. In einer weiteren bevorzugten Ausgestaltung kann es vorgesehen sein, dass der Träger vor oder bei Verfahrensschritt f) auf eine Temperatur erhitzt wird, die oberhalb der Kristallisierungstemperatur eines in der Trägerplatte bzw. dem Trägermaterial vorliegenden Kunststoffs liegt.

Im weiteren Verlauf erfolgt in einem weiteren Verfahrensschritt g) anschließend gegebenenfalls ein Abkühlen der bahnförmigen Trägerplatte. die Trägerplatte kann insbesondere durch das Vorsehen einer Kühlvorrichtung mit definierten Kühlstufen auf eine Temperatur abgekühlt werden, welche der Raumtemperatur entspricht oder rein beispielhaft in einem Bereich von bis zu 20°C darüber liegt. Beispielsweise kann eine Mehrzahl an Kühlzonen vorliegen, um ein definiertes Abkühlen der Trägerplatte zu ermöglichen.

Es kann ferner vorgesehen sein, dass die Trägerplatte nach Verfahrensschritt f), insbesondere unmittelbar nach Verfahrensschritt f) auf eine Temperatur erhitzt wird, die oberhalb der Kristallisierungstemperatur eines in dem Träger vorliegenden Kunststoffes liegt. Anschließend kann die Trägerplatte wiederum unter die Kristallisierungstemperatur, beispielsweise auf Raumtemperatur (22°C), abgekühlt werden. Insbesondere, wenn die Trägerplatte nach dem Behandeln der Trägerplatte gemäß Verfahrensschritt f) und insbesondere nach einem Abkühlen des Träges nach Verfahrensschritt f) erneut erhitzt wird auf eine Temperatur, die oberhalb der Kristallisierungstemperatur des Kunststoffs des Trägermaterials liegt, können die Eigenschaften der Trägerplatte noch weiter verbessert werden. Beispielsweise kann die Trägerplatte verbesserte Stabilitätseigenschaften aufweisen, insbesondere hinsichtlich seiner mechanischen und/oder thermischen und/oder chemischen Beständigkeit. Dadurch kann die Qualität der Trägerplatte weiter verbessert werden.

Die Kristallisierungstemperatur ist dabei im Sinne der vorliegenden Erfindung insbesondere die Temperatur, auf welche das Polymer erhitzt werden muss, um anschließend beim Abkühlen Kristalle ausbilden zu können. Insbesondere beginnt die Kristallbildung bei einem Abkühlen des Polymers bei einer Temperatur, die unterhalb der Schmelztemperatur und gegebenenfalls oberhalb der Glasübergangstemperatur liegen kann. Entsprechend kann ein Erhitzen auf eine Temperatur unterhalb der Schmelztemperatur des jeweiligen Kunststoffes oder auf eine Temperatur unterhalb der Schmelztemperatur ausreichen. Für den Fall von linearem Polyethylen (LLDPE) kann beispielsweise ein Erhitzen auf eine Temperatur in einem Bereich von ≥ 100°C bis ≤ 150°C, beispielsweise von 120°C, ausreichend sein. Für den Fall von Polypropylen kann beispielsweise ein Erhitzen auf eine Temperatur in einem Bereich von ≥ 160°C bis ≤ 200°C, beispielsweise von 180°C, ausreichend sein.

Die Dauer des entsprechenden Erhitzens kann somit in für den Fachmann verständlicher Weise abhängen von der Verfahrgeschwindigkeit des Trägers, von seiner Dicke und von der einzustellenden Temperatur.

Nach einem Abkühlen der erzeugten Trägerplatte kann die Trägerplatte zunächst in bahnartiger Form oder als vereinzelte plattenartige Träger als Zwischenprodukt gelagert werden und das Verfahren kann zunächst beendet sein. Vorzugsweise schließen sich jedoch unmittelbar weitere Behandlungsschritte an, welche etwa ohne ein Anschleifen realisierbar sein können, insbesondere um den bereitgestellten Träger derart zu bearbeiten, um ein fertiges Paneel zu erzeugen, wie dies nachstehend im Detail erläutert ist.

Zur Herstellung eines fertigen Paneels kann das Verfahren die weiteren folgenden Verfahrensschritte umfassen, um die Trägerplatte mit einem Dekor zu versehen und dieses mit einer Schutzschicht zu beschichten. Dabei werden die nachfolgenden Schritte bevorzugt unmittelbar mit der erzeugten bahnförmigen Trägerplatte durchgeführt. Es ist von der Erfindung jedoch ebenfalls mit umfasst, dass die bahnförmige Trägerplatte vor einem geeigneten der Verfahrensschritte g) bis i) zunächst in eine Vielzahl plattenförmiger Träger unterteilt wird und/oder die Trägerplatte durch die entsprechend folgenden Verfahrensschritte weiter behandelt wird. Die nachstehenden Erläuterungen gelten für beide Alternativen entsprechend, wobei zur Vereinfachung im Weiteren von einer Behandlung des Trägers gesprochen wird.

Es kann ferner gegebenenfalls zunächst etwa vor dem Verfahrensschritt h) ein Vorbehandeln des Trägers zur elektrostatischen Entladung und gegebenenfalls anschließender elektrostatischer Beladung erfolgen. Dies kann insbesondere dazu dienen, das Auftreten von Unschärfen im Laufe der Dekoraufbringung zu vermeiden.

Weiterhin kann gemäß Verfahrensschritt h) ein Aufbringen eines eine Dekorvorlage nachbildenden Dekors auf zumindest einen Teilbereich des Trägers erfolgen. Dabei kann das Dekor durch den sogenannten Direktdruck aufgebracht werden. Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht beziehungsweise ein Dekoruntergrund verstanden. Es können unterschiedliche Drucktechniken, wie beispielsweise Flexo-Druck, Offset-Druck oder Siebdruck zum Einsatz gelangen. Insbesondere können als Digitaldrucktechniken beispielsweise Inkjet-Verfahren oder Laserdruck-Verfahren eingesetzt werden.

Die Dekorschichten können ferner aus einer insbesondere strahlungshärtbaren Farbe und/oder Tinte ausgebildet werden. Beispielsweise kann eine UV-härtbare Farbe oder Tinte verwendet werden.

Dabei können die Dekorschichten jeweils in einer Dicke in einem Bereich von ≥ 5 µm bis ≤ 10µm aufgebracht werden.

Es kann ferner vorgesehen sein, neben einer bezüglich Farbe und/oder Struktur positiven Abbildung ferner auch eine entsprechende negative Abbildung der Dekorvorlage aufzubringen. Im Detail kann, wie es beispielsweise von einem Positiv-Beizen beziehungsweise Negativ-Beizen für Holzwerkstoffe bekannt ist, durch die Verwendung von digitalen Daten der Farbeindruck beispielsweise einer Maserung umgekehrt werden, so dass bezüglich der Farbe beziehungsweise insbesondere helleren und dunkleren Bereichen ein Negativ entsteht. Entsprechendes ist neben dem Farbeindruck ebenfalls für die aufgebrachte Struktur möglich, so dass auch bezüglich der strukturellen Ausgestaltung ein Negativ realisierbar ist. Auch derartige Effekte sind auf Basis digitaler dreidimensionaler Daten problemlos und ohne Vorlaufzeit beziehungsweise Umbauten in einen Herstellungsprozess integrierbar.

Gemäß Verfahrensschritt i) kann ein Aufbringen einer Schutzschicht auf zumindest einen Teilbereich des Dekors vorgesehen sein. Eine derartige Schicht zum Schutz des aufgebrachten Dekors kann insbesondere als Verschleiß- oder Deckschicht oberhalb der Dekorschicht in einem nachfolgenden Verfahrensschritt aufgebracht werden, welche insbesondere die Dekorschicht vor Abnutzung oder Beschädigung durch Schmutz, Feuchtigkeitseinfluss oder mechanische Einwirkungen, wie beispielsweise Abrieb, schützt. Beispielsweise kann es vorgesehen sein, dass die Verschleiß- und/oder Deckschicht als vorproduzierte Overlayschicht, etwa basierend auf Melamin, auf den bedruckten Träger aufgelegt und mit diesem durch Druck- und/oder Wärmeeinwirkung verbunden wird. Ferner kann es bevorzugt sein, dass zur Ausbildung der Verschleiß- und/oder Deckschicht ebenfalls eine strahlungshärtbare Zusammensetzung, wie beispielsweise ein strahlungshärtbarer Lack, wie einem Acryllack, aufgebracht wird. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann die Auftragung beispielsweise mittels Walzen, wie Gummiwalzen oder mittels Gießvorrichtungen aufgetragen werden.

Weiterhin kann die Deckschicht zunächst teilgehärtet werden und im Anschluss eine Endlackierung mit einem Urethanacrylat und eine Endhärtung, etwa mit einem Galliumstrahler, durchgeführt werden.

Ferner kann die Deck- und/oder Verschleißschicht Mittel zur Verringerung der statischen (elektrostatischen) Aufladung des letztendlichen Laminates aufweisen. Beispielsweise kann es dazu vorgesehen sein, dass die Deck- und/oder Verschleißschicht Verbindungen wie z.B. Cholinchlorid aufweist. Das Antistatikmittel kann dabei beispielsweise in einer Konzentration zwischen ≥0,1 Gew.-% und ≤40,0 Gew.-%, bevorzugt zwischen ≥1,0 Gew.-% und ≤30,0 Gew.-% in der Deck- und/oder Zusammensetzung zur Ausbildung Verschleißschicht enthalten sein.

Des Weiteren kann es vorgesehen sein, dass in die Schutzschicht beziehungsweise Verschleiß- oder Deckschicht eine Strukturierung, insbesondere eine mit dem Dekor übereinstimmende Oberflächenstrukturierung durch das Einbringen von Poren eingebracht wird. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt. Weiterhin kann es vorgesehen sein, dass eine Strukturierung der Dekorpaneele nach dem Auftrag der Deck- und/oder Verschleißschicht erfolgt. Hierzu kann es bevorzugt vorgesehen sein, dass als Deck- und/oder Verschleißschicht eine härtbare Zusammensetzung aufgetragen wird und ein Aushärtungsprozess nur in dem Maße erfolgt, dass lediglich eine Teilhärtung der Deck- und/oder Verschleißschicht erfolgt. In die so teilgehärtete Schicht wird mittels geeigneter Werkzeuge, wie beispielsweise einer Hartmetall-Strukturwalze oder eines Stempels, eine gewünschte Oberflächenstruktur eingeprägt. Dabei erfolgt die Prägung in Übereinstimmung mit dem aufgebrachten Dekor. Zur Gewährleistung einer hinreichenden Übereinstimmung der einzubringenden Struktur mit dem Dekor kann es vorgesehen sein, dass die Trägerplatte und das Prägewerkzeug durch entsprechende Relativbewegungen zueinander ausgerichtet werden. Im Anschluss an die Einbringung der gewünschten Struktur in die teilgehärtete Deck- und/oder Verschleiß schicht erfolgt eine weitere Härtung der nun strukturierten Deck- und/oder Verschleiß schicht.

Das vorstehend beschriebene Verfahren ermöglicht das Erzeugen eines Paneels mit einem Träger, der eine besonders hohe Feuchte- und Temperaturresistenz aufweist.

In einer weiteren bevorzugten Ausgestaltung kann es vorgesehen sein, dass vor Verfahrensschritt e) ein Trennmittel derart angeordnet wird, dass es zumindest in der Zweibandpresse zwischen dem Träger und einem Fördermittel, etwa dem oberen Fördermittel, vorzugsweise zwischen dem Träger und beiden Fördermitteln, angeordnet ist. In dieser Ausgestaltung kann ein Anhaften des Trägers an einem Fördermittel besonders effektiv verhindert werden. Das Trennmittel kann beispielsweise auf einer ersten Rolle aufgerollt sein und zusammen mit dem Träger durch die Zweibandpresse und gegebenenfalls die weitere Presseinheit, wie etwa den Kalander, geführt werden, bevor es auf eine weitere Rolle aufgerollt wird. Vorzugsweise liegt zwischen dem Trennmittel und dem Träger keine Relativgeschwindigkeit vor. In anderen Worten bewegt sich das Trennmittel vorzugsweise in der gleichen Geschwindigkeit, wie der Träger. Beispielsweise kann das Trennmittel ein Trennpapier umfassen, wie beispielsweise ein Ölpapier. Unter einem auch als Wachspapier bezeichneten Ölpapier kann dabei in an sich bekannter Weise ein beispielsweise holzfreies Papier verstanden werden, welches eine organische Substanz, etwa ein Öl beziehungsweise Wachs oder Paraffin aufweist, beispielsweise mit diesem getränkt ist.

Gemäß einer weiteren Ausgestaltung kann Verfahrensschritt d) durchgeführt wird unter Verwendung einer S-Walze. Durch das Verwenden einer S-Walze als Komprimierungseinheit kann ein gewünschtes Komprimieren mit einem einfachen und kostengünstigen Mittel definiert auch bei hohen Liniengeschwindigkeiten ermöglicht werden. Um die entsprechende und in Abhängigkeit des gewünschten Ergebnisses geeignete Kraft einstellen zu können, kann die Walze beispielsweise in Richtung auf das durchlaufende Trägermaterial verstellbar sein. Dabei kann die S-Walze beispielsweise nur eine Walze umfassen, welche eine Kraft ausübt nur in Kombination mit einer Gegenkraft durch die Bandspannung der Fördermittel. Alternativ kann eine oder eine Mehrzahl an Gegenwalzen vorgesehen sein, welche die entsprechende Gegenkraft aufbringen.

Unter einer S-Walze kann im Sinne der Erfindung eine Walze verstanden werden, welche derart angeordnet ist, dass der Träger sie s-förmig umläuft, wie es für den Fachmann bekannt ist und nachstehend mit Bezug auf die Figuren im Detail beschrieben ist.

Ferner kann gegebenenfalls in der Zweibandpresse ein Temperaturgradient eingestellt werden. Dies kann insbesondere durch einen Temperaturgradienten in einer zu der Förderrichtung senkrechten Richtung ermöglicht werden. In dieser Ausgestaltung kann eine besonders hohe Liniengeschwindigkeit erlaubt werden, da etwa ein besonders schnelles Aufheizen ermöglicht werden kann, was eben eine hohe Liniengeschwindigkeit erlaubt. Dabei kann weiterhin eine zu hohe Temperatureinwirkung auf das Trägermaterial verhindert werden, was Beschädigungen verhindern und eine besonders hohe Qualität ermöglichen kann. Darüber hinaus kann etwa ein Entgasen bei einer Erhitzung des Trägermaterials verbessert und beschleunigt werden, was wiederum eine hohe Liniengeschwindigkeit erlaubt und ferner durch das Verhindern von Gaseinschlüssen eine besonders hohe Stabilität und Qualität ermöglichen kann. Dabei letzteren Fall kann insbesondere der Bereich unterhalb des Trägermaterials höher erhitzt werden, als der Bereich oberhalb des Trägermaterials, also etwa ein unteres Temperierelement eine höhere Temperatur aufweisen, als ein oberes Temperierelement. Beispielsweise kann hier ein Temperaturgradient in einem Bereich von 50°C vorteilhaft sein.

Mit Bezug auf weitere technische Merkmale und Vorteile des vorbeschriebenen Verfahrens wird explizit auf die vorstehende Beschreibung des Trägermaterials und des Paneels Bezug genommen.

Die Erfindung ist nachfolgend anhand der Figuren sowie eines Ausführungsbeispiels weiter erläutert.
Fig. 1 zeigt schematisch eine Ausgestaltung einer erfindungsgemäßen Vorrichtung zum Durchführen eines Teils des erfindungsgemäßen Verfahrens;
Fig. 2 zeigt eine beispielhafte S-Walze zum Durchführen eines Verfahrensschritts des erfindungsgemäßen Verfahrens; und
Fig. 3 zeigt schematisch eine Ausgestaltung einer erfindungsgemäßen Trägerplatte;

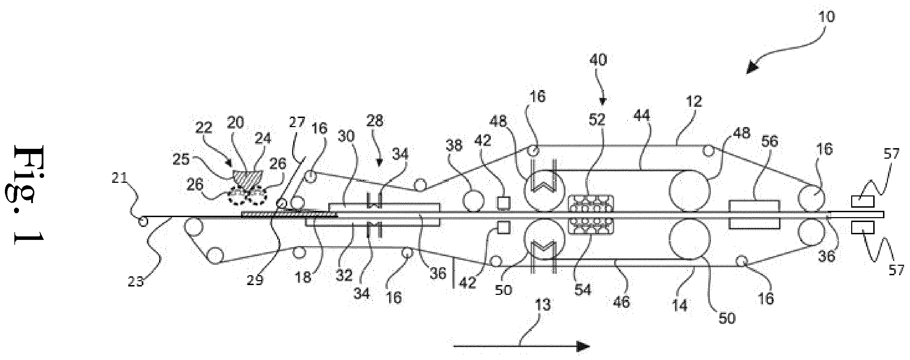

Die Vorrichtung 10 nach Figur 1 ist geeignet für ein Verfahren zur Herstellung eines dekorierten Wand- oder Bodenpaneels. Dabei werden bezüglich Figur 1 insbesondere Bearbeitungsstationen für die folgenden Verfahrensschritte beschrieben:
a) Bereitstellen eines schüttfähigen Trägermaterials 20, insbesondere eines Granulats,
b) Anordnen des Trägermaterials 20 zwischen zwei bandartigen Fördermitteln 12,14, wobei oberhalb und/oder unterhalb des Trägermaterials 20 ein Kunststoffvlies 23, 27 aufweisend einen Kunststoff mit einem Schmelzpunkt oberhalb des Schmelzpunktes des Matrixmaterials angeordnet wird, wobei der Unterschied ΔT_{S} der Schmelzpunkte des Kunststoffvlieses und des Matrixmaterials in einem Bereich zwischen ≥ 1°C und ≤ 50°C, vorzugsweise zwischen ≥ 2°C und ≤ 40°C liegt,
c) Formen des Trägermaterials 20 unter Einwirkung von Temperatur unter Ausbildung eines bahnförmigen Trägers 36,
d) Komprimieren des Trägers 36,
e) Behandeln des Trägers 36 unter Einwirkung von Temperatur und Druck, insbesondere unter Verwendung einer Zweibandpresse,
f) gegebenenfalls Abkühlen des Trägers 36.

Der so erzeugte bahnförmige Träger 36 umfasst eine Kernlage und zumindest ein auf der Oberseite der Kernlage vorgesehenes Kunststoffvlies 27, sowie ggf. ein auf der Unterseite der Kernlage vorgesehenes zweites Kunststoffvlies 23.

An diese Verfahrensschritte anschließend kann das Verfahren weitere Verfahrensschritte aufweisen, um das fertige Wand- oder Bodenpaneel zu erhalten.

Die Vorrichtung 10 gemäß Figur 1 umfasst zunächst zwei umlaufende bandartige Fördermittel 12, 14, welche insbesondere durch Umlenkrollen 16 derart geführt sind, dass sich zwischen ihnen ein Aufnahmeraum 18 zum Aufnehmen und bearbeiten eines bereitgestellten schüttfähigen, insbesondere granularen Trägermaterials 20, sowie des Kunststoffvlieses 27 bzw. der Kunststoffvliese 27 und 23 ausbildet. Das Trägermaterial 20 weist ein einen Kunststoff aufweisendes Matrixmaterial und ein Feststoffmaterial auf, wobei das Feststoffmaterial zu wenigstens 50 Gew.-%, insbesondere zu wenigstens 80 Gew.-%, insbesondere zu wenigstens 95 Gew.-%, bezogen auf das Feststoffmaterial, durch Talkum gebildet ist, wobei das Matrixmaterial in einer Menge, bezogen auf das Trägermaterial, von ≥ 30 Gew.-% bis ≤ 70 Gew.-%, insbesondere von ≥ 40 Gew.-% bis ≤ 60 Gew.-%, vorliegt und wobei das Feststoffmaterial, bezogen auf das Trägermaterial, in einer Menge, bezogen auf das Trägermaterial, von ≥ 30 Gew.-% bis ≤ 70 Gew.-%, insbesondere von ≥ 40 Gew.-% bis ≤ 60 Gew.-%, vorliegt, und wobei das Trägermaterial und das Feststoffmaterial gemeinsam, bezogen auf das Trägermaterial 20, in einer Menge von ≥ 95 Gew.-%, insbesondere ≥ 99 Gew.-%, vorliegen.

Insbesondere kann das Trägermaterial 20 ferner bereitgestellt werden unter Verwendung eines Knetmischers, bei dem die Ausgangsmaterialien mit einer Schnecke vermischt und gefördert werden und so durch eine Lochscheibe gepresst und etwa durch einen Schrägabschneider in kleine Partikel zerteilt werden, um so ein Granulat zu erhalten.

Das Kunststoffvlies 23, 27 weist erfindungsgemäße einen Kunststoff mit einem Schmelzpunkt oberhalb des Schmelzpunktes des Matrixmaterials auf, wobei der Unterschied ΔT_{S} der Schmelzpunkte des Kunststoffvlieses und des Matrixmaterials in einem Bereich zwischen ≥ 1°C und ≤ 50°C, vorzugsweise zwischen ≥ 2°C und ≤ 40°C liegt. Das Trägermaterial 20 kann so auf das untere Fördermittel 14 bzw. sofern vorgesehen auf das auf dem unteren Fördermittel 14 angeordnete Kunststoffvlies 23 aufgebracht werden und anschließend durch das untere und das obere Fördermittel 12 bzw. das oberhalb des Trägermaterials aufgebrachten oberen Kunststoffvlies 27 begrenzt werden. Dabei kann es vorgesehen sein, dass die Kunststoffvliese 23, 27 der Vorrichtung über Umlenkrollen 21, 29 zugeführt werden, um eine optimiertes Abrollen bzw. eine gleichmäßige Auflage auf dem unteren Fördermittel 14 bzw. dem Trägermaterial 20 zu erreichen. Dabei repräsentieren die Umlenkrollen 21, 29 ggf. auch mehrere zusammenwirkende Umlenkrollen welche gemeinsam ein Spannsystem ausbilden, mittels welchem die Kunststoffvliese 23, 27 mit einer gleichmäßigen Spannung bzw. Reckung auf das untere Fördermittel 14 bzw. das Trägermaterial 20 aufgelegt werden.

Dabei kann es vorgesehen sein, dass das erste, obere Kunststoffvlies 27 ein Flächengewicht G in einem Bereich zwischen ≥ 15 g/m² und ≤ 150 g/m², vorzugsweise zwischen ≥ 30 g/m² und ≤ 100 g/m² aufweist. Hierbei hat sich gezeigt, dass das Vorsehen von Kunststoffvliesen 27 mit einem höheren Flächengewicht zu einer Verschlechterung der mechanischen Belastbarkeit der Oberfläche führt, wohingegen das Vorsehen eines Kunststoffvlieses mit einem geringeren Flächengewicht zu einer Verschlechterung des Druckbildes eines im Zuge eines Direktdruckverfahrens aufgebrachten Dekors führt.

Weiterhin kann es vorgesehen sein, dass das Kunststoffvlies 27 eine polare Oberfläche aufweist. Die polare Oberfläche kann dabei eine polare Oberflächenspannung γ in einem Bereich zwischen ≥ 30 mJ/m² und ≤ 60 mJ/m², vorzugsweise zwischen ≥ 35 mJ/m² und ≤ 58 mJ/m² aufweist. Dabei wird die polare Oberflächenspannung mittels Kontaktwinkelmessung in Übereinstimmung mit der DIN 55660-5 bestimmt. Es hat sich gezeigt, dass eine derart gewählte polare Oberflächenspannung geeignet ist, mit der in einem Direktdruckverfahren, wie insbesondere einem Tintenstrahlverfahren unter Verwendung strahlungshärtbarer Tinten, aufgetragenen Farben bzw. Farbstoffen derart zu wechselwirken, dass ein hervorragendes Druckbild erreicht werden kann. In einer besonders bevorzugten Ausgestaltung kann dabei auf das Vorsehen eines separat auf das Kunststoffvlies aufgebrachten Druckuntergrundes verzichtet werden.

Das zweite, untere Kunststoffvlies 23 kann bevorzugt ein Flächengewicht G in einem Bereich zwischen ≥ 100 g/m² und ≤ 250 g/m² aufweisen.

Die Fördermittel 12, 14 können zumindest teilweise aus Polytetrafluorethylen ausgestaltet sein, beispielsweise damit beschichtet sein. Weiterhin können die Fördermittel 12, 14 zumindest teilweise, insbesondere auf ihrer dem Aufnahmeraum 18 zugewandten Seite, geraut beziehungsweise strukturiert sein. Ferner können die Fördermittel 12, 14 etwa eine Breite in einem Bereich von etwa 1,5m bis 2,5m aufweisen.

Um das Trägermaterial 20 zwischen den bandartigen Fördermitteln 12, 14 beziehungsweise in dem Aufnahmeraum 18 anzuordnen, ist eine Austrageinheit 22 mit einem oder einer Mehrzahl an Austragköpfen 24 vorgesehen, durch welche das Trägermaterial 20 auf dem unteren Fördermittel 14 bzw. sofern vorgesehen das untere Kunststoffvlies 23 anordbar ist. Die Austragköpfe 24 können dabei einen Trichter 25 umfassen, der das Trägermaterial 20 auf entsprechende Streuwalzen 26 aufbringt, woraufhin das Trägermaterial 20 auf das untere Fördermittel 14 gestreut werden kann.

Um ein homogenes Auftragen des Trägermaterials 20 auf dem unteren Fördermittel 14 bzw. dem unteren Kunststoffvlies 23 sicherzustellen, kann ein Sensor zum Überprüfen des Anordnens des Trägermaterials 20 zwischen zwei bandartigen Fördermitteln 12, 14 vorgesehen sein. Der Sensor kann insbesondere mit der Austrageinheit 22 gekoppelt sein, um eine potentiell ungenaue Befüllung des Aufnahmeraums 18 unmittelbar zu korrigieren.

Um ein besonders homogenes Verteilen des Trägermaterials 20 zu ermöglichen, können ferner Vibratoren vorgesehen sein. Diese können etwa auf das untere Fördermittel 14 einwirken und dabei beispielsweise unter dem unteren Fördermittel 14 angeordnet sein, so dass das Trägermaterial 20 fein verteilt wird.

Um eine ungewünschte Verunreinigung und eine Beschädigung nachfolgender Bearbeitungsstationen zu verhindern, kann ferner ein Sensor zum Detektieren von Metallen vorgesehen sein, welcher ungewollt eingefügtes Metall detektieren kann.

In der Förderrichtung der Fördermittel 12, 14, welche durch den Pfeil 13 gekennzeichnet ist, ist ferner eine Formeinheit 28 vorgesehen, welche dazu ausgestaltet ist, das Trägermaterial 20 zusammen mit dem Kunststoffvlies 27 oder dem Kunststoffvliesen 23 und 27 unter Einwirkung von Temperatur beziehungsweise Hitze zum Verschmelzen des Trägermaterials 20 unter Ausbildung eines bahnförmigen Trägers 36 zu formen. Hierzu kann die Formeinheit 28 etwa zwei plattenartige Formeinrichtungen 30, 32 aufweisen, welche durch eine Heizeinrichtung 34, etwa mittels eines Thermoöls, heizbar sind. Dadurch kann das Trägermaterial 20 erhitzt werden, bis es, abhängig etwa von dem Schmelzpunkt des Trägermaterials 20 oder eines Teils desselben, eine Temperatur von beispielhaft und in Abhängigkeit des verwendeten Materials, etwa von ≥ 180°C bis ≤ 200°C, erreicht hat. Hierzu kann die Formeinheit 28 beziehungsweise können die Formeinrichtungen 30, 32 beispielsweise auf eine Temperatur von bis zu 250°C erhitzt werden. Dabei kann beispielsweise eine oder zur Einstellung eines Temperaturgradienten eine Mehrzahl an unabhängig einstellbaren Heizbereichen vorgesehen sein. Beispielsweise können die gesamten Formeinrichtungen 30, 32, welche etwa eine Länge von mehreren Metern aufweisen können, beheizbar sein, oder nur ein Teil derselben kann heizbar sein. Grundsätzlich wird die Temperatur dabei so gewählt, dass ein vollständiges Aufschmelzen des Kunststoffs der Kunststoffvliese 23 und 27 vermieden wird.

Weiterhin kann die Formeinheit 28 insbesondere einen parallelen Spalt aufweisen, der durch die plattenartige Formeinrichtungen 30, 32 gebildet sein kann. Dabei kann jedoch am Einlauf durch eine konische Form ein Einlaufmaul vorgesehen sein, um einen verbesserten Einlauf des Trägermaterials 20 sowie zumindest des oberen Kunststoffvlieses 27 zu ermöglichen. Die auf das Trägermaterial 20 und das Kunststoffvlies 27 wirkende Kraft kann dabei in einem Bereich von > 0 kg/m² bis zu ≤ 1kg/m² liegen. Dabei kann insbesondere eine gleichmäßige Druckbeaufschlagung ohne das Vorsehen eines Druckprofils beziehungsweise eines Druckgradienten vorgesehen sein.

In der Figur 1 ist ferner zu erkennen, dass die untere Formeinrichtung 32 länger ist, als die obere Formeinrichtung 30 und ferner vor der oberen beginnt. Dadurch kann erreicht werden, dass eine Bearbeitung erst erfolgt, wenn das Trägermaterial 20 bereits geschmolzen oder zumindest angeschmolzen und zumindest teilweise erweicht ist. Dadurch kann ein besonders definierter Formgebungsprozess ermöglicht werden.

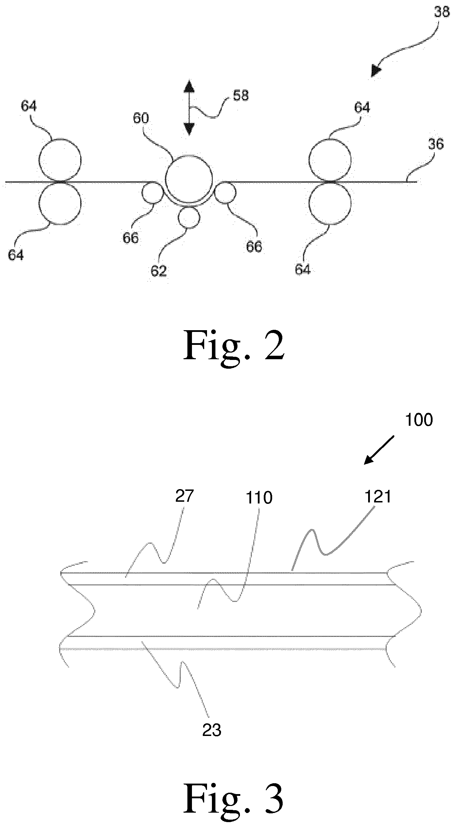

Im weiteren Verlauf in Förderrichtung der Fördereinheiten 12, 14 wird der bandartige Träger 36 durch eine Presseinrichtung 38 geführt. Die Presseinrichtung 38 kann beispielsweise eine S-Walze umfassen, welche im Detail in der Figur 2 gezeigt ist. Die S-Walze kann dabei im Wesentlichen senkrecht zu der Oberfläche des Trägers 36 und damit zu der Verfahrrichtung des Trägers 36 verfahrbar sein, wie dies der Pfeil 58 andeutet, so dass die gewünschten Drücke besonders vorteilhaft einstellbar sein können. Ferner kann die Presseinrichtung 38 beispielsweise auf den Träger 36 einen Druck ausüben, der in einem Bereich von ≥ 1kg/m² bis ≤ 3kg/m² liegen kann. Die S-Walze umfasst dabei eine Hauptwalze 60, welche auf den bahnförmigen Träger 36 einwirkt. Unter Umständen kann dabei die Bandspannung als Gegendruck ausreichen, wobei es jedoch bevorzugt ist, dass wenigstens eine Gegendruckwalze 62 vorgesehen ist. Für ein geeignetes Führen des bahnartigen Trägers 36 können ferner zwei Paare von Kalanderwalzen 64 und gegebenenfalls Umlenkwalzen 66 vorgesehen sein, welche ferner für eine geeignete Bandspannung sorgen können. In der Figur 2 ist dabei zu erkennen, dass der bahnartige Träger 36um die Umlenkwalzen 66 und die Hauptwalze 60 zweifach S-förmig geführt wird, welche Führung den Begriff S-Walze bedingt. Im Detail kann die Hauptwalze 60 durch den bahnförmigen Träger 36 in einem Bereich von ungefähr 50% oder mehr umschlungen sein. Die Temperatur des Trägers 36 entspricht bei einem Einlauf in die Presseinrichtung 38 ferner insbesondere der beim Ausgang aus der Formeinheit 28 vorliegenden Temperatur.

Von der Presseinrichtung 38 wird der Träger 36 im Weiteren zu einer weiteren Presseinrichtung 40 geführt. Um einen etwaigen Wärmeverlust des Trägers 36 ausgleichen oder den Träger 36 bewusst weiter zu erhitzen oder auch zu kühlen, kann zwischen den Presseinrichtungen 38, 40 eine weitere Temperiereinrichtung 42 vorgesehen sein.

Zurückkommend zu der Presseinrichtung 40 kann dieses vorteilhafter Weise eine Zweibandpresse sein, welche insbesondere Stahlbänder 44, 46 aufweisen kann und wobei die Bänder 44, 46 der Zweibandpresse durch Umlenkrollen 48, 50 geführt sein können. Die Umlenkrollen 48, 50 können beispielsweise beheizt sein, etwa mittels einer Thermoölheizung und/oder die Rollen auf der gleichen Seite des Spalts können etwa einen Abstand in einem Bereich von ≥1m bis ≤ 2m, beispielsweise 1,5m voneinander angeordnet sein, wobei die Bänder 44, 46 eine Breite in einem Bereich von etwa 1,5m aufweisen können. Gemäß Figur 1 werden der sich zwischen den Fördermitteln 12, 14 befindliche Träger 20 und zumindest das obere Kunststoffvlies zwischen die Umlenkrollen 48, 50 und somit zwischen die Bänder 44, 46, wie insbesondere Stahlbänder geführt. Auf der dem Träger 36 gegenüberliegenden Seite der Bänder 44, 46 sind jeweils Press- und/oder Heizeinrichtungen 52, 54 vorgesehen. Diese können die Fördereinrichtungen 12, 14 und damit den Träger 36 sowohl erhitzen, als auch geringfügig komprimieren. Hierzu kann etwa eine Luft-Heizung vorgesehen sein und eine Mehrzahl an Rollen, welche ein intermittierendes Pressen ermöglichen können. Dabei kann eine Temperatur in einem Bereich von bis zu 250°C auf den Träger 36 einwirken. Beispielsweise kann die Temperatur in einem Bereich von ≥ 25°C bis ≤ 35°C oberhalb der Schmelztemperatur beziehungsweise Erweichungstemperatur des Trägermaterials oder eines Teils desselben liegen. Weiterhin kann ein derartiger Druck auf den Träger 36 einwirken, dass der Träger 36 bei Verfahrensschritt e) um einen Faktor von ≤ 7,5%, vorzugsweise ≤ 5%, beispielsweis in einem Bereich von >0,1mm bis ≤ 0,2mm komprimiert wird. Die Press-und/oder Heizeinrichtungen 52, 54 können dabei im Wesentlichen den gesamten Bereich zwischen den Umlenkrollen 48, 50 einnehmen, oder auch nur einen entlang der Förderrichtung begrenzten Bereich. Nach Durchlaufen der Presseinrichtung 40 kann der Träger etwa eine Temperatur in einem Bereich von 190°C aufweisen.

Die Presseinrichtung 40 kann dabei ein veränderliches Druckprofil aufweisen, etwa beginnend mit 6mm und endend mit 4,1mm, oder vorteilhaft als isochore Presse ausgestaltet sein.

In der Förderrichtung hinter der Presseinrichtung 40 ist gemäß Figur 1 eine Kühleinrichtung 56 angeordnet, durch welche der Träger auf eine Temperatur abgekühlt werden kann, welche beispielsweise in einem Bereich von ≤ 35°C liegt. Dabei kann die Kühleinrichtung 56 beispielsweise auf einer Wasserkühlung basieren und etwa mehrere Kühlzonen umfassen, um eine definierte Kühlung unter Verwendung genau anpassbarer Kühlprogramme zu ermöglichen. Die Länge der Kühlzone kann dabei der wirksamen Länge der Presseinrichtung 40 entsprechen. Im Anschluss an die Kühleinrichtung 56 kann etwa noch ein weiteres Kühlband vorgesehen sein.

Nach diesen Verfahrensschritten kann der Träger, der etwa eine Enddicke in einem Bereich von ≥ 3mm bis ≤ 5mm, beispielsweise 4,1mm, aufweisen kann, unmittelbar weiterbehandelt werden, oder gelagert werden, etwa als bahnförmiger Träger 36 oder als bereits vereinzelter plattenförmiger Träger.

An dieser Stelle können sich die weiteren Verfahrensschritte anschließen:
g) gegebenenfalls Aufbringen eines Dekoruntergrunds auf zumindest einen Teilbereich des Trägers 36;
h) Aufbringen eines eine Dekorvorlage nachbildenden Dekors auf zumindest einen Teilbereich des Trägers 36,
i) Aufbringen einer Schutzschicht auf zumindest einen Teilbereich des Dekors,
j) gegebenenfalls Strukturieren der Schutzschicht, und
k) gegebenenfalls Behandeln des Trägers 36 zur elektrostatischen Entladung vor einem der vorgenannten Verfahrensschritte.

In der Figur 3 ist ein erfindungsgemäß erzeugbare Trägerplatte 100 im Detail gezeigt, die Bestandteil eines Wand- oder Bodenpaneels beziehungsweise ein Halbzeug zum Ausbilden eines solches sein kann. Die Trägerplatte 100 weist eine Kernlage 110 auf, welche aus dem Trägermaterial geformt ist. In der Ausgestaltung gemäß Figur 3 ist es ferner vorgesehen, dass die Kernlage 110 an seiner Oberseite durch ein Kunststoffvlies 27 abgeschlossen ist. Optional kann es vorgesehen sein, dass die Kernlage 110 auch an ihrer Unterseite durch ein Kunststoffvlies 23 abgeschlossen ist. Das obere Kunststoffvlies 27 weist auf der der Kernlage 110 gegenüberliegenden Seite eine polare Oberfläche 121 auf. Die polare Oberfläche 121 weist dabei bevorzugt eine polare Oberflächenspannung γ in einem Bereich zwischen ≥ 30 mJ/m² und ≤ 60 mJ/m², vorzugsweise zwischen ≥ 35 mJ/m² und ≤ 58 mJ/m² auf. Das Kunststoffvlies 27 weist einen Schmelzpunkt oberhalb des Schmelzpunktes des Matrixmaterials der Kernlage 110 auf, wobei der Unterschied ΔT_{S} der Schmelzpunkte des Kunststoffvlieses 27 und des Matrixmaterials bevorzugt in einem Bereich zwischen ≥ 1°C und ≤ 50°C, vorzugsweise zwischen ≥ 2°C und ≤ 40°C liegt. Das Flächengewicht G des Kunststoffvlies 27 liegt bevorzugt in einem Bereich zwischen ≥ 15 g/m² und ≤ 150 g/m², vorzugsweise zwischen ≥ 30 g/m² und ≤ 100 g/m².

Optional kann die Trägerplatte auf ihrer Unterseite, mithin der Unterseite der Kernlage 110, ein zweites Kunststoffvlies 23 aufweisen. Das zweite Kunststoffvlies 23 weist dabei bevorzugt ein Flächengewicht G in einem Bereich zwischen ≥ 100 g/m² und ≤ 250 g/m² auf.

Bevorzugt weisen beide Kunststoffvliese einen Polyesterkunststoff oder Polyamidkunststoff auf. Insbesondere können sie aus einem solchen Polyesterkunststoff oder Polyamidkunststoff bestehen. Besonders bevorzugt handelt es sich bei dem Polyesterkunststoff um ein Polyethylenterephthalat (PET).

### Bezugszeichen:

- 10: Vorrichtung
- 12: bandartiges Fördermittel
- 13: Pfeil
- 14: bandartiges Fördermittel
- 16: Umlenkrolle
- 18: Aufnahmeraum
- 20: Trägermaterial
- 21: Umlenkrolle
- 22: Austrageinheit
- 23: unteres Kunststoffvlies
- 24: Austragkopf
- 25: Trichter
- 26: Streuwalze
- 27: oberes Kunststoffvlies
- 28: Formeinheit
- 29: Umlenkrolle
- 30: Formeinrichtung
- 32: Formeinrichtung
- 34: Heizeinrichtung
- 36: bandartiger Träger
- 38: Presseinrichtung
- 40: Presseinrichtung
- 42: Temperiereinrichtung
- 44: Stahlbänder
- 46: Stahlbänder
- 48: Umlenkrolle
- 50: Umlenkrolle
- 52: Heizeinrichtung
- 54: Heizeinrichtung
- 56: Kühleinrichtung
- 58: Pfeil
- 60: Hauptwalze
- 62: Gegendruckwalze
- 64: Kalanderwalze
- 66: Umlenkwalze
- 100: Trägerplatte
- 110: Kernlage
- 121: polare Oberfläche

## Patentansprüche

1. Trägerplatte (100) für ein direkt bedrucktes Wand-, Boden- oder Deckenpaneel, aufweisend zumindest eine Kernlage (110) aus einem einen Kunststoff aufweisenden Matrixmaterial und einem Feststoffmaterial, und eine oberhalb der Kernlage (110) angebrachte Lage eines ersten Kunststoffvlieses (27), **dadurch gekennzeichnet, dass** das Kunststoffvlies auf der der Kernlage (110) gegenüberliegenden Seite eine polare Oberfläche (121) aufweist.

2. Trägerplatte (100) gemäß Anspruch 1, wobei das erste Kunststoffvlies (27) einen Schmelzpunkt oberhalb des Schmelzpunktes des Matrixmaterials der Kernlage (110) aufweist.

3. Trägerplatte (100) gemäß Anspruch 2, wobei der Unterschied ΔT_{S} der Schmelzpunkte des Kunststoffvlieses (27) und des Matrixmaterials in einem Bereich zwischen ≥ 1°C und ≤ 50°C, vorzugsweise zwischen ≥ 2°C und ≤ 40°C liegt.

4. Trägerplatte (100) nach einem der vorhergehenden Ansprüche, wobei das erste Kunststoffvlies (27) ein Flächengewicht G in einem Bereich zwischen ≥ 15 g/m² und ≤ 150 g/m², vorzugsweise zwischen ≥ 30 g/m² und ≤ 100 g/m² aufweist.

5. Trägerplatte (100) nach einem der vorhergehenden Ansprüche, wobei die polare Oberfläche (121) eine polare Oberflächenspannung γ in einem Bereich zwischen ≥ 30 mJ/m² und ≤ 60 mJ/m², vorzugsweise zwischen ≥ 35 mJ/m² und ≤ 58 mJ/m² aufweist.

6. Trägerplatte (100) nach einem der vorhergehenden Ansprüche, wobei das erste Kunststoffvlies (27) unter Ausschluss einer Zwischenlage auf der Kernlage (110) angeordnet ist.

7. Trägerplatte (100) nach einem der vorhergehenden Ansprüche, wobei das Matrixmaterial Polypropylen umfasst, wobei das Polypropylen eine Mischung aus einem Homopolymer und einem Copolymer aufweist und wobei das Feststoffmaterial zumindest ein Material aus der Gruppe bestehend aus Talkum, Blähton, Holz, Vulkanasche, Bims, Porenbeton, anorganischen Schäumen und Cellulose ist.

8. Trägerplatte (100) nach einem der vorhergehenden Ansprüche, wobei diese auf der dem ersten Kunststoffvlies (27) gegenüberliegenden Seite der Kernlage (110) ein zweites Kunststoffvlies (23) aufweist.

9. Trägerplatte (100) nach Anspruch 8, wobei das zweite Kunststoffvlies (23) einen Schmelzpunkt oberhalb des Schmelzpunktes des Matrixmaterials der Kernlage (110) aufweist, wobei der Unterschied ΔT_{S} der Schmelzpunkte des Kunststoffvlieses (27) und des Matrixmaterials vorzugsweise in einem Bereich zwischen ≥ 1°C und ≤ 50°C, vorzugsweise zwischen ≥ 2°C und ≤ 40°C liegt.

10. Trägerplatte (100) nach einem der Ansprüche 8 oder 9, wobei das zweite Kunststoffvlies (23) ein Flächengewicht G in einem Bereich zwischen ≥ 100 g/m² und ≤ 250 g/m² aufweist.

11. Trägerplatte (100) nach einem der vorhergehenden Ansprüche, wobei das erste Kunststoffvlies (27) und/oder das zweite Kunststoffvlies (23) ein Polyesterkunststoff, vorzugsweise Polyethylenterephthalat (PET), oder ein Polyamid (PA) aufweist.

12. Direkt bedrucktes Wand-, Decken- oder Fußbodenpaneel, aufweisend eine Trägerplatte nach einem der Ansprüche 1 bis 11 sowie eine unter Ausschluss einer Druckunterlageschicht auf dem ersten Kunststoffvlies (27) mittels eines Direktdruckverfahrens aufgebrachte Dekorschicht.

13. Direkt bedrucktes Wand-, Decken- oder Fußbodenpaneel gemäß Anspruch 12, wobei dieses an zumindest zwei gegenüberliegenden Seiten kompatible Verriegelungsmittel ausweist die dazu eingerichtet sind, zwei aneinander angrenzende Paneele lösbar miteinander zu verbinden.

14. Verfahren zur Herstellung eines direkt bedruckten Wand-, Decken- oder Fußbodenpaneels, aufweisend die Schritte:
a) Bereitstellen eines schüttfähigen Trägermaterials, insbesondere eines Granulats, wobei das Trägermaterial ein einen Kunststoff aufweisendes Matrixmaterial und ein Feststoffmaterial aufweist, wobei das Matrixmaterial in einer Menge, bezogen auf das Trägermaterial, von ≥ 30 Gew.-% bis ≤ 70 Gew.-% vorliegt und wobei das Feststoffmaterial, bezogen auf das Trägermaterial, in einer Menge von ≥ 30 Gew.-% bis ≤ 70 Gew.-% vorliegt, und wobei das Trägermaterial und das Feststoffmaterial gemeinsam, bezogen auf das Trägermaterial, in einer Menge von ≥ 95 Gew.-%, insbesondere ≥ 99 Gew.-%, vorliegen,
b) Anordnen des Trägermaterials zwischen zwei bandartigen Fördermitteln, wobei oberhalb und/oder unterhalb des Trägermaterials ein Kunststoffvlies aufweisend einen Kunststoff mit einem Schmelzpunkt oberhalb des Schmelzpunktes des Matrixmaterials angeordnet wird, wobei der Unterschied ΔT_{S} der Schmelzpunkte des Kunststoffvlieses und des Matrixmaterials in einem Bereich zwischen ≥ 1°C und ≤ 50°C, vorzugsweise zwischen ≥ 2°C und ≤ 40°C liegt,
c) Formen des Trägermaterials unter Einwirkung von Temperatur unter Ausbildung eines bahnförmigen Trägers,
d) Komprimieren des Trägers,
e) Behandeln des Trägers unter Einwirkung von Druck unter Verwendung einer Zweibandpresse,
f) Abkühlen des Trägers,
h) Aufbringen eines eine Dekorvorlage nachbildenden Dekors auf zumindest einen Teilbereich der Kunststoffvliese mittels eines Direktdruckverfahrens, und
i) Aufbringen einer Schutzschicht auf zumindest einen Teilbereich des Dekors.

15. Verfahren gemäß Anspruch 14, wobei die Aufbringung des Dekors in Schritt h) unter Ausschluss eines vor dem Aufbringen des Dekors auf das Kunststoffvlies aufgebrachten Druckuntergrundes erfolgt.
